# EUROPEAN PATENT APPLICATION

(11) **EP 4 808 138 A1**
(43) Date of publication of application: **16.09.2026**
(21) Application number: 26154119.7
(22) Date of filing: 26.01.2026
(51) Int. Cl.: H04N 23/611, H04N 23/69, H04N 23/695

(54) **PTZ CAMERA CONTROL APPARATUS, METHOD, AND PROGRAM**

(30) Priority: 12.03.2025 JP 2025039659
(71) Applicant: Canon Kabushiki Kaisha, Tokyo, 146-8501 (JP)
(72) Inventor: OKADA, Eiji, Tokyo, 146-8501 (JP)
(74) Representative: Canon Europe Limited

(57) **Abstract**

A control apparatus detects a subject from an image captured by an imaging unit, determines a predetermined composition for capturing the detected subject, and controls pan, tilt, and zoom of the imaging unit so that the detected subject is captured with the predetermined composition. The control apparatus determines the predetermined composition by combining two or more compositions selected from among a first composition based on a plurality of subjects, a second composition based on an orientation of the subject, a third composition based on a posture of the subject, and a fourth composition based on a predetermined set region.

## Description

### Technical Field

The present disclosure relates to a control apparatus, a control method, and a program.

### BACKGROUND

A remote camera configured to perform pan, tilt, and zoom (hereinafter, referred to as "PTZ") adjustments is used to, for example, track a specific subject and adjust the position and angle of the camera based on the motion of the subject. In conventional imaging control technologies for a remote camera, automatic tracking of a single subject is primarily performed. However, during an online meeting or similar situations, a plurality of subjects is often present simultaneously, and frequent changes occur in the number of subjects, posture, face orientation, or the like. Therefore, there is a need for a system capable of controlling a composition efficiently and flexibly. Furthermore, there is a need for a control technology capable of responding to advanced imaging needs, such as prioritizing a specific subject from a plurality of subjects for inclusion in the imaging range or ensuring inclusion of a specific region in the imaging range.

Japanese Patent Laid-Open No. 2021-57660 describes a technology configured to recognize a subject in an imaging range of a camera including a PTZ mechanism, detect an orientation of the subject, and perform PTZ adjustments based on the orientation of the subject so that the subject is included within the imaging range. The technology changes the position of the subject in the imaging range based on the orientation of the subject in the imaging range, thereby reducing the likelihood of failing to capture a subject outside the imaging range.

However, as the technology described in Japanese Patent Laid-Open No. 2021-57660 performs PTZ control based solely on the orientation of the subject and adjusts a composition, the imaging range determined by PTZ control of an imaging apparatus may not be adjusted to capture a plurality of subjects with a composition suitable for the positions, postures, and the like of the plurality of subjects.

### SUMMARY

The present disclosure in its first aspect provides a control apparatus as specified in claim 1. Optional features are specified in claims 2 to 13.

The present disclosure in its second aspect provides a control method as specified in claim 14.

The present disclosure in its third aspect provides a program as specified in claim 15.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of an exterior of an imaging apparatus.
Fig. 2 is a diagram illustrating an example of a functional configuration of the imaging apparatus.
Fig. 3 is a flowchart illustrating an imaging range control processing flow.
Fig. 4 is a flowchart illustrating a composition determination processing flow.
Fig. 5A is a diagram illustrating an example of an image of a standing, front-facing subject, and Fig. 5B is a diagram illustrating an example of subject information.
Fig. 6A is a diagram illustrating an example of an image of a standing, left-facing subject, and Fig. 6B is a diagram illustrating an example of subject information.
Fig. 7A is a diagram illustrating an example of an image of a sitting, front-facing subject, and Fig. 7B is a diagram illustrating an example of subject information.
Fig. 8A is a diagram illustrating an example of an image of a sitting, right-facing subject, and Fig. 8B is a diagram illustrating an example of subject information.
Fig. 9A is a diagram illustrating an example of an image of a plurality of subjects having an orientation and posture, and Fig. 9B is a diagram illustrating an example of subject information.
Figs. 10A to 10D are diagrams illustrating examples of composition control for a plurality of subjects in which standing and sitting subjects are mixed.
Figs. 11A to 11C are diagrams illustrating examples of control for a case where a priority region is set.
Figs. 12A to 12C are diagrams illustrating examples of control for a case where a fixed angle-of-view region is set.
Figs. 13A to 13D are diagrams illustrating examples of control for a case where a tracking termination region is set.
Figs. 14A to 14C are diagrams illustrating examples of control for a case where an automatic selection region is set.
Figs. 15A and 15B are diagrams illustrating examples of control for a case where a selection-excluded region is set.

### DESCRIPTION OF THE EMBODIMENTS

Various embodiments of the present disclosure will be described below with reference to the drawings. The embodiments described below are not intended to limit the present disclosure, and a plurality of features described in the embodiments is not always required for the technical solution of the present disclosure and may be combined in any suitable combination. A configuration of any of the embodiments may be corrected or changed as appropriate for a specification of an apparatus to which the present disclosure is applied or various conditions (such as a condition of use or a usage environment). A portion of an embodiment described below may be combined with a portion of another embodiment described below.

### First Embodiment

In a first embodiment, a pan-tilt-zoom (PTZ) camera system configured to adjust an imaging direction by performing pan and tilt control and adjust an imaging angle of view by performing zoom control (zoom magnification, zoom position) in a case where a plurality of subjects is used as an example for explanation.

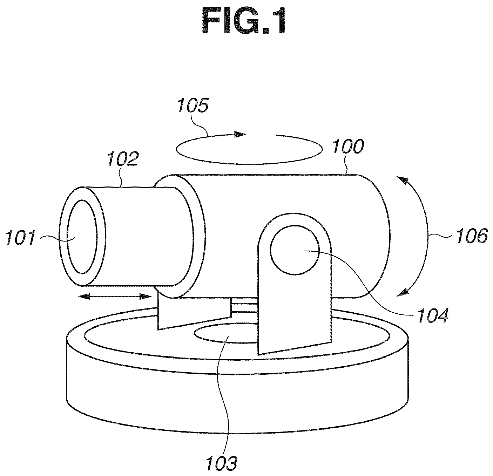

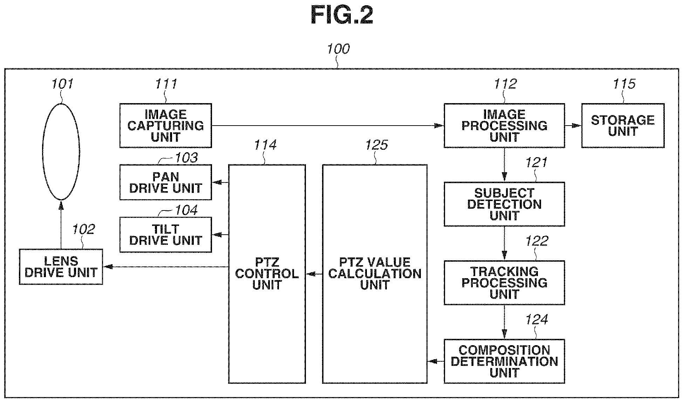

Fig. 1 is an external view illustrating an example of an exterior configuration of an imaging apparatus 100 according to the present embodiment. Fig. 2 is a functional block diagram illustrating an example of a functional configuration of the imaging apparatus 100 according to the present embodiment. Among the functional units illustrated in Fig. 2, an image processing unit 112, a PTZ control unit 114, a storage unit 115, a subject detection unit 121, tracking processing unit 122, a composition determination unit 124, a PTZ value calculation unit 125, and the like are realized by a central processing unit (CPU) executing a control program according to the present embodiment. Some or all of the functional units may be realized by a hardware configuration, such as a circuit. The control program is a computer program stored in a read-only memory (ROM), which is not illustrated, or the like of the imaging apparatus 100 and is loaded into a random access memory (RAM), which is not illustrated, and executed by a CPU, which is not illustrated. The image processing unit 112, the PTZ control unit 114, the storage unit 115, the subject detection unit 121, the tracking processing unit 122, the composition determination unit 124, the PTZ value calculation unit 125, and the like may be incorporated into the imaging apparatus 100 as a control apparatus or may be provided separately from the imaging apparatus 100. Not all but some of the image processing unit 112, the PTZ control unit 114, the storage unit 115, the subject detection unit 121, the tracking processing unit 122, the composition determination unit 124, the PTZ value calculation unit 125, and the like may be incorporated into the control apparatus. The imaging apparatus 100 may include the functions of the control apparatus.

A lens 101 forms an optical image of a subject or the like on an image sensor of an image capturing unit 111. An optical axis direction of the lens 101 corresponds to an imaging direction of the imaging apparatus 100 according to the present embodiment. The lens 101 includes a focus lens and a zoom magnification adjustment lens configured to change a focal length by adjusting the zoom magnification (zoom position). The lens 101 and the image capturing unit 111 may also be referred to as an image capturing device.

A lens drive unit 102 includes a drive system configured to drive the lens 101 and drives the focus lens and the zoom magnification adjustment lens of the lens 101 under control of the PTZ control unit 114.

A pan drive unit 103 includes a mechanical drive system and a motor. The mechanical drive system performs pan driving, and the motor is a drive source. The pan drive unit 103 performs driving to rotate the imaging direction of the imaging apparatus 100 in a pan direction 105 under control of the PTZ control unit 114, which will be described below.

A tilt drive unit 104 includes a mechanical drive system and a motor. The mechanical drive system performs tilt driving, and the motor is a drive source. The tilt drive unit 104 performs driving to rotate the imaging direction of the imaging apparatus 100 in a tilt direction 106 under control of the PTZ control unit 114.

The PTZ control unit 114 performs drive control of the pan drive unit 103, the tilt drive unit 104, and the lens drive unit 102 based on PTZ values calculated by the PTZ value calculation unit 125, which will be described below, thereby performing pan, tilt, and zoom control of the imaging apparatus 100.

The image capturing unit 111 includes an image sensor which is not illustrated, such as a charge-coupled device (CCD) sensor or a complementary metal-oxide-semiconductor (CMOS) sensor and a peripheral circuit thereof. The image capturing unit 111 photoelectrically converts the optical image of the subject or the like formed by the lens 101, thereby generating an electrical signal.

The image processing unit 112 performs image processing, such as converting the photoelectrically converted electrical signal from the image capturing unit 111 into a digital signal and encoding, thereby generating image data. Hereinafter, unless an explicit explanation is necessary, image data will be referred to simply as an image.

The storage unit 115 stores the image processed by the image processing unit 112, information indicating an imaging range, information indicating a predetermined set region, which will be described, and the like. For example, the predetermined region is a region set by a user of the imaging apparatus 100 according to the present embodiment. However, the predetermined region may be set externally via a network or the like. Details of the predetermined region, such as a specific example, will be described below.

The subject detection unit 121 detects a subject from the image processed by the image processing unit 112, acquires the position and size of the detected subject, and extracts the number of detected subjects, a subject orientation, a subject posture, and the like as subject information. According to the present embodiment, the subject detection unit 121 is configured to detect a human figure as a subject, the face orientation of the human figure as the subject orientation, the posture of the human figure standing or sitting on a chair as the subject posture, and the like.

Specifically, the subject detection unit 121 acquires a circumscribed rectangle of the detected human figure, a circumscribed rectangle (referred to as the face rectangle) of the face of the human figure, and the position and size of the rectangle and, furthermore, extracts the number of detected human figures, the orientation of the face, and information indicating the standing or sitting posture as subject information. Details of the subject information, such as a specific example, will be described below.

The tracking processing unit 122 performs a process of tracking a tracking target subject (hereinafter, referred to as the tracking target) based on the image processed by the image processing unit 112, the position and size of the subject detected by the subject detection unit 121, and the subject information. In a case where no tracking target has been determined and tracking has not been performed, the tracking processing unit 122 selects a tracking target subject and starts the tracking process. On the other hand, in a case where tracking processing is already performed, the tracking processing unit 122 performs tracking processing based on the input subject information from the subject detection unit 121. For the tracking process, any method may be employed that can identify the position of the tracking target in a current frame based on the position of the tracking target in a previous frame and the input subject information from the subject detection unit 121 and tracks the tracking target. Examples include a method in which a position obtained by associating a position predicted from a movement history of the tracking target with the position of the face rectangle detected by the subject detection unit 121 is determined as the position of the tracking target.

The tracking processing unit 122 also performs a process of adding type information to the subject information. The type information indicates whether a specific subject is the tracking target. According to the present embodiment, the tracking processing unit 122 determines whether the type of the subject is "MAIN" or "SUB". The type "MAIN" indicates that the subject is the main tracking target, and the type "SUB" indicates that the subject is a sub-tracking target. There is one subject for which the type of the subject is determined as "MAIN". Regarding a method for determining a subject to be determined as "MAIN", any method may be employed that can select a single subject (single human figure) as the tracking target from a plurality of subjects. For example, the tracking processing unit 122 determines a subject having a face center closest to a screen center as "MAIN".

Then, the tracking processing unit 122 outputs, to the composition determination unit 124, the position and size of the subject detected by the subject detection unit 121, the tracking target tracking result from the tracking processing unit 122, and the subject information with the type information added by the tracking processing unit 122.

The composition determination unit 124 selects a target composition mode for imaging performed by the imaging apparatus 100 according to the present embodiment based on the input subject information from the tracking processing unit 122. Specifically, the composition determination unit 124 according to the present embodiment determines a composition mode capable of realizing a target composition so that the subject is placed at an appropriate position and size to achieve an appropriate layout and size within the imaging range of the imaging apparatus 100. The composition determination unit 124 can select a composition mode capable of realizing a composition based on not only the position and size of the subject within the imaging range but also the orientation of the subject and the predetermined region.

Examples of the composition mode according to the present embodiment include a single-subject composition mode, a plurality-subjects composition mode, a subject-posture composition mode, a subject-orientation composition mode, and a set-region composition mode. The set-region composition mode will be described in a third or subsequent embodiment.

The single-subject composition mode is a composition mode for a case where a single subject is detected by the subject detection unit 121, i.e., there is a single tracking target. The single-subject composition mode is a composition mode configured to place the main tracking target subject determined as type MAIN at a predetermined position (e.g., a screen center) within the imaging range. The single-subject composition mode may be employed in conjunction with one or both of the subject-posture composition mode and the subject-orientation composition mode. Details of the subject, the imaging range, and the like in the single-subject composition mode will be described below.

The plurality-subjects composition mode is a composition mode for a case where a plurality of subjects is detected by the subject detection unit 121. The plurality-subjects composition mode is a composition mode configured to place the plurality of subjects including a sub-tracking target determined as type SUB within the imaging range while preferentially arranging the main tracking target determined as type MAIN within the imaging range. The plurality-subjects composition mode includes an all-subjects composition mode configured to place all of the plurality of subjects within the imaging range and a composition mode configured to place the subjects within the imaging range for each posture, which can be selected in advance. Examples of the composition mode configured to place the subjects within the imaging range for each posture according to the present embodiment include a standing-subject composition mode configured to place a standing subject within the imaging range and a sitting-subject composition mode configured to place a sitting subject within the imaging range. Accordingly, according to the present embodiment, one of the all-subjects composition mode, the standing-subject composition mode, and the sitting-subject composition mode may be applied in advance in the plurality-subjects composition mode. Furthermore, in the plurality-subjects composition mode, the subject-orientation composition mode may be employed in conjunction. Details of the subject, the imaging range, and the like in the plurality-subjects composition mode will be described below.

The subject-posture composition mode is a composition mode based on the posture of the subject. Examples of the subject-posture composition mode according to the present embodiment for a case where the subject is a human figure include a standing composition mode and a sitting composition mode. The standing composition mode is a composition mode based on a case where the human figure is standing, and the sitting composition mode is a composition mode based on a case where the human figure is sitting on a chair or the like. In the subject-posture composition mode, the subject-orientation composition mode may be employed in conjunction. Details of the subject, the imaging range, and the like in the subject-posture composition mode will be described below.

The subject-orientation composition mode is a composition mode based on the direction in which the subject faces. Examples of the subject-orientation composition mode according to the present embodiment for a case where the subject is a human figure include a face-orientation composition mode based on face orientation. For example, in a case where the face orientation of the subject is "front", the face-orientation composition mode applies a composition in which the subject is positioned at the center of the imaging range. Further, for example, in a case where the face of the subject is oriented away from the front, the face-orientation composition mode applies a composition that includes a margin in the gaze direction of the human figure based on the face orientation. For example, in a case where the face orientation is "left", a composition that includes a predetermined amount of margin in the gaze direction of the leftward human figure is applied, and in a case where the face orientation is "right", a composition that includes a predetermined amount of margin in the gaze direction of the right-facing human figure is applied. For example, a composition that includes a predetermined amount of margin in the gaze direction of the human figure can be realized by calculating pan and shift values so that the imaging range is shifted (moved) toward the gaze direction by the predetermined amount. Details of the subject, the imaging range, and the like in the subject-orientation composition mode will be described below.

The composition determination unit 124 applies either the single-subject composition mode or the plurality-subjects composition mode based on the subject information and, furthermore, applies the sitting composition mode, the standing composition mode, the face-orientation composition mode, or the like in a case where the applied mode is used in conjunction. Then, the composition determination unit 124 outputs information indicating the determination results for the composition modes and the subject information to the PTZ value calculation unit 125.

The PTZ value calculation unit 125 calculates pan, tilt, and zoom values (PTZ values) for imaging the subject and the like using a composition corresponding to the composition mode based on the subject information and the composition mode determination result and outputs the PTZ values to the PTZ control unit 114. The PTZ control unit 114 performs drive control of the pan drive unit 103, the tilt drive unit 104, and the lens drive unit 102 based on the PTZ values. At that time, the imaging range of the imaging apparatus 100 is determined based on the imaging direction and zoom magnification. The imaging direction is determined based on the pan and tilt values, and the zoom magnification is determined based on the zoom value. Accordingly, the imaging apparatus 100 performs imaging using the composition corresponding to the composition mode applied by the composition determination unit 124.

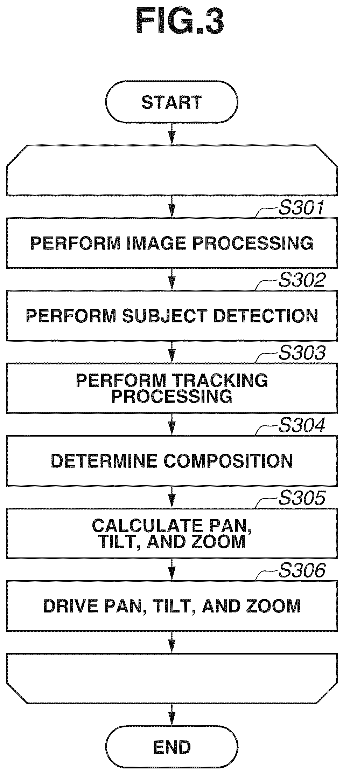

Fig. 3 is a flowchart illustrating an overall processing flow during adjustment of the imaging range of the imaging apparatus 100 according to the present embodiment.

In a case where a power supply of the imaging apparatus 100 is turned on, the image capturing unit 111 of the imaging apparatus 100 starts periodic frame-by-frame imaging (i.e., moving image capturing) to acquire an image. Then, the image capturing unit 111 outputs the captured image to the image processing unit 112.

In step S301, the image processing unit 112 performs various types of image processing. Then, the image processing unit 112 outputs the processed image to the subject detection unit 121.

In step S302, after the processed image is input, the subject detection unit 121 performs a subject detection process on the image and acquires the position and size of a detected subject. The subject detection unit 121 acquires the number of subjects (the number of human figures), the orientation of the subject (face orientation), the posture of the subject (standing, sitting), and the like as subject information. Then, the subject detection unit 121 outputs the position and size of the detected subject and the subject information together with the processed image to the tracking processing unit 122.

In step S303, after the subject information acquired as a result of detecting the subject by the subject detection unit 121 is input, the tracking processing unit 122 identifies the tracking target based on the subject information and performs tracking processing on the tracking target. The tracking processing unit 122 determines the type of the subject. Then, the tracking processing unit 122 outputs the result of tracking the tracking target, the position and size of the subject, and the subject information to which the type of the subject is added to the composition determination unit 124.

Next, in step S304, the composition determination unit 124 applies the composition mode based on the result of tracking the tracking target, the position and size of the subject, and the subject information including the type that are input from the tracking processing unit 122. Then, the composition determination unit 124 outputs information indicating the composition mode determination result and the subject information to the PTZ value calculation unit 125.

Next, in step S305, the PTZ value calculation unit 125 calculates PTZ values for imaging the subject and the like using the composition corresponding to the composition mode based on the composition mode determination result and the subject information and outputs the PTZ values to the PTZ control unit 114.

For example, in a case where the composition mode is the single-subject composition mode, the PTZ value calculation unit 125 calculates pan and tilt values so that the subject (e.g., the center position of the face rectangle) appears at a predetermined position (e.g., the center position) within the imaging range corresponding to the composition of the single-subject composition mode. The PTZ value calculation unit 125 calculates a zoom value so that the subject appears at a predetermined size with respect to the imaging range corresponding to the composition.

Further, for example, in a case where the composition mode is the plurality-subjects composition mode, the PTZ value calculation unit 125 calculates pan and tilt values so that a centroid position based on all the plurality of subjects (e.g., a centroid position of each face rectangle) is placed at a center of the imaging range. The PTZ value calculation unit 125 calculates a zoom value so that the ratio of the width of each subject (e.g., the width of the circumscribed rectangle of the face) to the width of the imaging range falls within a predetermined range. These are mere examples, and any method in which PTZ values are calculated based on the composition may be employed.

Furthermore, for example, in a case where the sitting composition mode, the standing composition mode, the face-orientation composition mode, or the like is used in conjunction with the single-subject composition mode or the plurality-subjects composition mode, the PTZ value calculation unit 125 calculates PTZ values also based on these composition modes.

Then, in step S306, the PTZ control unit 114 controls pan, tilt, and zoom drives based on the PTZ values calculated by the PTZ value calculation unit 125. This adjusts the imaging range of the imaging apparatus 100 to an imaging range corresponding to the composition mode applied by the composition determination unit 124.

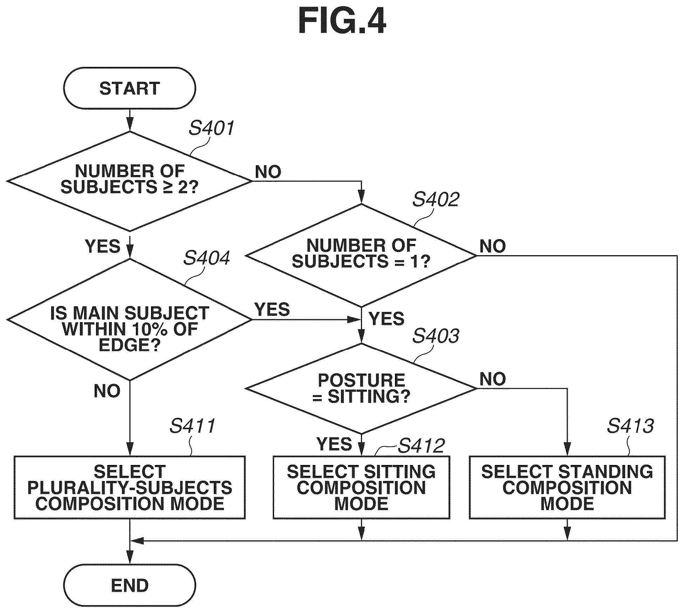

Fig. 4 is a flowchart illustrating a flow of the composition mode determination process (the composition mode application process) performed by the composition determination unit 124 in step S304 in Fig. 3. The composition determination unit 124 performs a process of selecting a target composition mode for imaging based on the position and size of the subject and the subject information including the type that are input from the tracking processing unit 122.

First, in step S401, the composition determination unit 124 determines whether the number of subjects is two or more based on the subject information input from the tracking processing unit 122. Then, in a case where the composition determination unit 124 determines that the number of subjects is two or more (YES in step S401), the processing proceeds to step S404. On the other hand, in a case where the composition determination unit 124 determines that the number of subjects is less than two (NO in step S401), the processing proceeds to step S402.

In the case where the processing proceeds to step S402, the composition determination unit 124 determines whether the number of subjects is one. In a case where the composition determination unit 124 determines that the number of subjects is one (YES in step S402), the single-subject composition mode is selected, and the processing proceeds to step S403. In a case where the composition determination unit 124 determines that the number of subjects is not one (the number of subjects is zero) (NO in step S402), it is judged that it is unnecessary to adjust the composition, and the composition mode determination process is terminated.

On the other hand, in the case where the processing proceeds to step S404, the composition determination unit 124 determines, for each subject, whether the type is MAIN or SUB, based on the subject information input from the tracking processing unit 122. Furthermore, the composition determination unit 124 determines whether the position of the subject determined as MAIN is within 10% of the edge of the current imaging range. In a case where the composition determination unit 124 determines that the position of the subject determined as MAIN is within 10% of the edge of the imaging range (YES in step S404), the processing proceeds to step S403. On the other hand, in a case where the composition determination unit 124 determines that the position of the subject determined as MAIN is not within 10% of the edge of the imaging range (NO in step S404), the processing proceeds to step S411.

In the case where the processing proceeds to step S411, the composition determination unit 124 selects the plurality-subjects composition mode as the target composition mode, and then the composition mode determination process is terminated. In the case where the plurality-subjects composition mode is selected in step S411, the PTZ value calculation unit 125 calculates PTZ values to achieve the imaging range corresponding to the plurality-subjects composition mode in the flowchart in Fig. 3.

As the all-subjects composition mode, the standing-subject composition mode, or the sitting-subject composition mode can be selected in the plurality-subjects composition mode, the PTZ value calculation unit 125 calculates PTZ values to which the selected composition mode is applied.

In the case where the processing proceeds to step S403, the composition determination unit 124 determines the posture of the subject based on the subject information input from the tracking processing unit 122. At that time, in the case where the processing proceeds to step S403 after determining in step S402 that the number of subjects is one, the composition determination unit 124 determines whether the posture of the subject is a sitting posture or a standing posture. In the case where the processing proceeds to step S403 after determining in step S404 that the position of the subject determined as MAIN is not within 10% of the edge of the imaging range, the composition determination unit 124 determines whether the posture of the subject determined as MAIN is a sitting posture or a standing posture. Whether the posture of the subject is a standing posture or a sitting posture may be determined by, for example, monitoring a change in the tilt value.

Then, in a case where the composition determination unit 124 determines that the posture of the subject is a sitting posture (YES in step S403), the processing proceeds to step S412, and the sitting composition mode is selected as the target composition mode. In this case, the PTZ value calculation unit 125 calculates a zoom value so that the subject is captured at a size greater than a size at which the subject is captured in the standing composition mode in the flowchart in Fig. 3.

On the other hand, in a case where the composition determination unit 124 determines that the posture of the subject is not a sitting posture (i.e., the posture of the subject is a standing posture) (NO in step S403), the processing proceeds to step S413, and the standing composition mode is selected as the target composition mode. In this case, the PTZ value calculation unit 125 calculates a zoom value so that the subject is captured at a size smaller than a size at which the subject is captured in the sitting composition mode in the flowchart in Fig. 3.

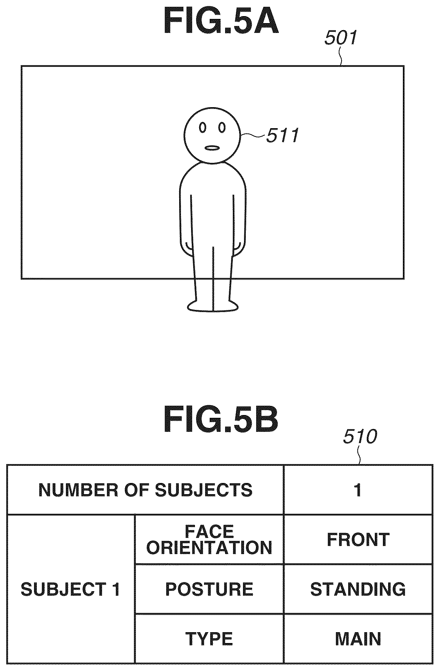

Figs. 5A to 9B are diagrams used to describe the image and the subject information that are input to the subject detection unit 121 and the composition mode and the imaging range that are applied by the composition determination unit 124.

Fig. 5A is a diagram illustrating an example of an image in which a single subject 511 is captured, as an example of the image input to the subject detection unit 121, illustrating an example of a case where the single-subject composition mode is applied by the composition determination unit 124. The image in Fig. 5A illustrates an example of a case where the face orientation of the subject 511 is forward and the posture of the subject 511 is standing.

Fig. 5B is a diagram illustrating an example of subject information 510 acquired based on the image illustrated in Fig. 5A. The human figure is used as an example of the subject in the present embodiment, and the subject information 510 includes information indicating the number of subjects, the face orientation of the subject, the posture of the subject, and the type of the subject. The number of subjects is information indicating the number of subjects (e.g., the number of faces) detected by the subject detection unit 121. The face orientation is information indicating the orientation of the face detected by the subject detection unit 121 and is "FRONT" (forward), "RIGHT" (rightward), or "LEFT" (leftward). The posture of the subject is information indicating the posture of the subject detected by the subject detection unit 121 and is either "STANDING" (standing) or "SITTING" (sitting). The type of the subject is information indicating the type determined by the tracking processing unit 122 and is either "MAIN" or "SUB". The subject information 510 illustrated as an example in Fig. 5B indicates that information indicating that the number of subjects is "1", the face orientation of a subject 1 is "FRONT" (forward), the posture is "STANDING" (standing), and the type is "MAIN" is included.

In a case where the subject information 510 illustrated in Fig. 5B is input, the composition determination unit 124 selects the standing composition mode in the single-subject composition mode in the flowchart in Fig. 4 and further selects the face-orientation composition mode for the face orientation "FRONT" (forward).

In this case, the PTZ value calculation unit 125 calculates pan and tilt values so that the position of the subject is placed at the center of the imaging range, and calculates a zoom value so that the subject is captured at a size smaller than a size at which the subject is captured in the sitting composition mode. For example, the PTZ value calculation unit 125 calculates a zoom value so that the ratio of the width of the circumscribed rectangle of the face to the width of the imaging range is less than the ratio of the width of the circumscribed rectangle of the face to the width of the imaging range in the sitting composition mode.

Then, the PTZ control unit 114 controls PTZ drives based on the PTZ values calculated by the PTZ value calculation unit 125. This adjusts the imaging range of the imaging apparatus 100 to an imaging range 501 illustrated in Fig. 5A.

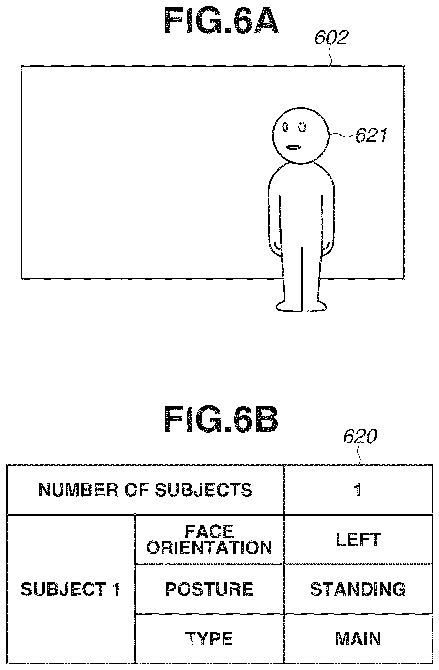

Fig. 6A is a diagram illustrating an example of an image in which a single subject 621 is captured, as an example of the image input to the subject detection unit 121, illustrating an example of a case where the single-subject composition mode is applied by the composition determination unit 124. The image in Fig. 6A illustrates an example of a case where the face orientation of the subject 621 is leftward and the posture of the subject 621 is standing.

Fig. 6B is a diagram illustrating an example of subject information 620 acquired based on the image illustrated in Fig. 6A. The subject information 620 illustrated as an example in Fig. 6B indicates that information indicating that the number of subjects is "1", the face orientation of the subject 1 is "LEFT" (leftward), the posture is "STANDING" (standing), and the type is "MAIN" is included.

In a case where the subject information 620 illustrated in Fig. 6B is input, the composition determination unit 124 selects the standing composition mode in the single-subject composition mode in the flowchart in Fig. 4 and further selects the face-orientation composition mode for the face orientation "LEFT" (leftward).

In this case, since the face orientation is "LEFT" (leftward), the PTZ value calculation unit 125 calculates pan and shift values to include a predetermined amount of margin in the gaze direction to the left of the position of the subject in which the face is oriented. In other words, the PTZ value calculation unit 125 calculates pan and shift values so that the imaging range is shifted (moved) leftward, which is the gaze direction, by a predetermined amount. The PTZ value calculation unit 125 calculates a zoom value so that the subject is captured at a size smaller than a size at which the subject is captured in the sitting composition mode, as described above.

The predetermined amount by which the imaging range is shifted based on the face orientation may be a shift amount that is predetermined or a shift amount that is based on the angle of the face orientation with respect to the forward direction, such as a shift amount that increases as the angle of the face orientation from the forward direction increases.

The face orientation may not remain stable due to movement of the subject, such as a human figure. Accordingly, the PTZ value calculation unit 125 may first calculate PTZ values so that the position of the subject is placed at the center of the imaging range, and in a case where there is no change in the face orientation of the subject, the PTZ value calculation unit 125 may calculate PTZ values so that the imaging range is adjusted to an imaging range 602 illustrated in Fig. 6A.

While Figs. 6A and 6B illustrate an example in which the standing composition mode is selected in the single-subject composition mode and the face-orientation composition mode is used in conjunction, it is also possible not to use the face-orientation composition mode in conjunction. In a case where the face-orientation composition mode is not used in conjunction, the PTZ value calculation unit 125 calculates pan and tilt values so that the position of the subject is placed at the center of the imaging range, as in the example illustrated in Figs. 5A and 5B.

Then, the PTZ control unit 114 controls PTZ drives based on the PTZ values calculated by the PTZ value calculation unit 125, as described above. This adjusts the imaging range of the imaging apparatus 100 to the imaging range 602 illustrated in Fig. 6A.

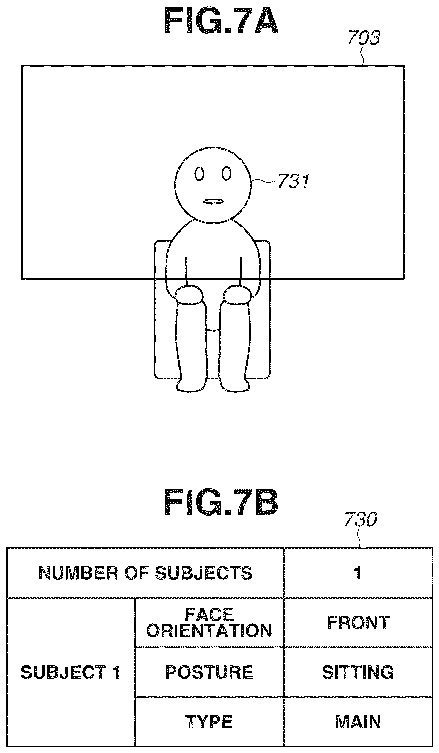

Fig. 7A is a diagram illustrating an example of an image in which a single subject 731 is captured, as an example of the image input to the subject detection unit 121, illustrating an example of a case where the single-subject composition mode is applied by the composition determination unit 124. The image in Fig. 7A illustrates an example of a case where the face orientation of the subject 731 is forward and the posture of the subject 731 is sitting.

Fig. 7B is a diagram illustrating an example of subject information 730 acquired based on the image illustrated in Fig. 7A. The subject information 730 illustrated as an example in Fig. 7B indicates that information indicating that the number of subjects is "1", the face orientation of the subject 1 is "FRONT" (forward), the posture is "SITTING" (sitting), and the type is "MAIN" is included.

In a case where the subject information 730 illustrated in Fig. 7B is input, the composition determination unit 124 selects the sitting composition mode in the single-subject composition mode in the flowchart in Fig. 4 and further selects the face-orientation composition mode for the face orientation "FRONT" (forward).

In this case, the PTZ value calculation unit 125 calculates pan and tilt values so that the position of the subject is placed at the center of the face rectangle of the human figure and the position of the center of the face rectangle is placed at the center of the imaging range. The PTZ value calculation unit 125 calculates a zoom value so that the subject is captured at a size greater than a size at which the subject is captured in the standing composition mode. For example, the PTZ value calculation unit 125 calculates a zoom value so that the ratio of the width of the circumscribed rectangle of the face to the width of the imaging range is greater than the ratio of the width of the circumscribed rectangle of the face to the width of the imaging range in the standing composition mode.

Then, the PTZ control unit 114 controls PTZ drives based on the PTZ values calculated by the PTZ value calculation unit 125. This adjusts the imaging range of the imaging apparatus 100 to an imaging range 703 illustrated in Fig. 7A.

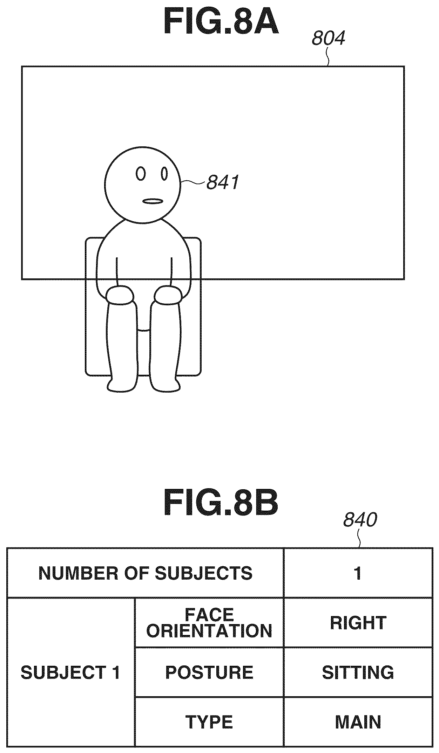

Fig. 8A is a diagram illustrating an example of an image in which a single subject 841 is captured, as an example of the image input to the subject detection unit 121, illustrating an example of a case where the single-subject composition mode is applied by the composition determination unit 124. The image in Fig. 8A illustrates an example of a case where the face orientation of the subject 841 is rightward and the posture of the subject 841 is sitting.

Fig. 8B is a diagram illustrating an example of subject information 840 acquired based on the image illustrated in Fig. 8A. The subject information 840 illustrated as an example in Fig. 8B indicates that information indicating that the number of subjects is "1", the face orientation of the subject 1 is "RIGHT" (rightward), the posture is "SITTING" (sitting), and the type is "MAIN" is included.

In a case where the subject information 840 illustrated in Fig. 8B is input, the composition determination unit 124 selects the sitting composition mode in the single-subject composition mode in the flowchart in Fig. 4 and further selects the face-orientation composition mode for the face orientation "RIGHT" (rightward).

In this case, since the face orientation is "RIGHT" (rightward), the PTZ value calculation unit 125 calculates pan and shift values to include a predetermined amount of margin in the gaze direction to the right of the position of the subject in which the face is oriented. In other words, the PTZ value calculation unit 125 calculates pan and shift values so that the imaging range is shifted (moved) rightward, which is the gaze direction, by a predetermined amount. The PTZ value calculation unit 125 calculates a zoom value so that the subject is captured at a size greater than a size at which the subject is captured in the standing composition mode, as described above. Even in this example, the predetermined amount by which the imaging range is shifted based on the face orientation may be a shift amount that is predetermined or a shift amount that is based on the angle of the face orientation with respect to the forward direction.

Then, the PTZ control unit 114 controls PTZ drives based on the PTZ values calculated by the PTZ value calculation unit 125. This adjusts the imaging range of the imaging apparatus 100 to an imaging range 804 illustrated in Fig. 8A.

In the example illustrated in Figs. 8A and 8B, as in the example illustrated in Figs. 6A and 6B, the face orientation may not remain stable due to movement of the subject. Accordingly, the PTZ value calculation unit 125 may first calculate PTZ values so that the position of the subject (the position of the center of the face rectangle) is placed at the center of the imaging range, and in a case where there is no change in the face orientation, the PTZ value calculation unit 125 may calculate PTZ values so that the imaging range is adjusted to the imaging range 804 illustrated in Fig. 8A.

In the example illustrated in Figs. 8A and 8B, it is also possible not to use the face-orientation composition mode in conjunction. In this case, the PTZ value calculation unit 125 calculates pan and tilt values as in the example illustrated in Figs. 7A and 7B.

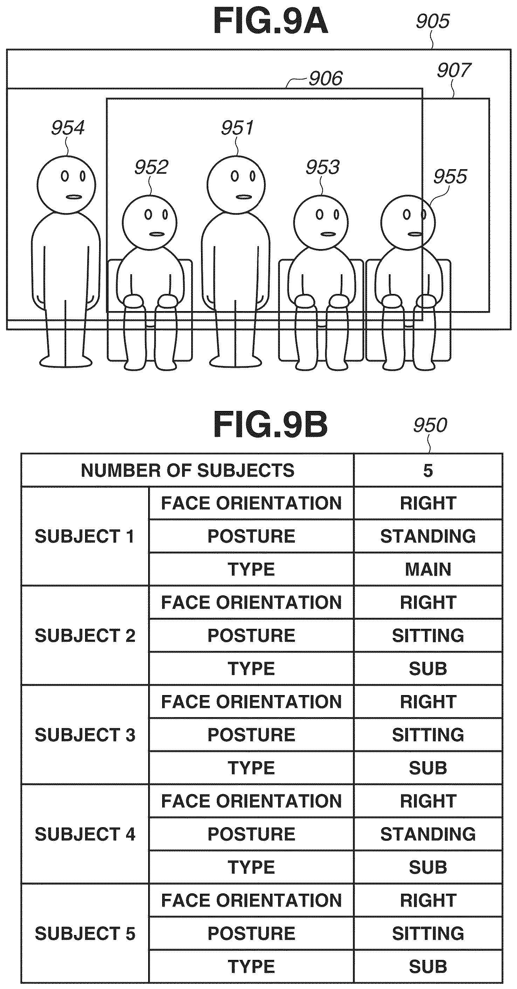

Fig. 9A is a diagram illustrating an example of an image in which a plurality of subjects 951, 952, 953, 954, and 955 is captured, as an example of the image input to the subject detection unit 121, illustrating an example of a case where the plurality-subjects composition mode is applied by the composition determination unit 124. The image in Fig. 9A illustrates an example of a case where all the face orientations of the plurality of subjects 951, 952, 953, 954, and 955 are rightward and the postures of the plurality of subjects 951, 952, 953, 954, and 955 include standing and sitting postures.

Fig. 9B is a diagram illustrating an example of subject information 950 acquired based on the image illustrated in Fig. 9A. The subject information 950 illustrated as an example in Fig. 9B indicates that information indicating that the number of subjects is "5" and indicating the face orientations, postures, and types of the subjects 1 to 5 is included. In the subject information 950 illustrated in Fig. 9B, the detected subjects 1 to 5 are listed in ascending order of the distance from the center of the imaging range to their face positions, with the subject 1 being closest to the center and the subject 5 being farthest from the center. In the case of the subject information 950 illustrated in Fig. 9B, the face orientations of the subjects 1 to 5 are RIGHT (rightward), the postures of the subjects 1 and 4 are STANDING (standing), the postures of the subjects 2, 3, and 5 are SITTING (sitting), the type of the subject 1 is MAIN, and the types of the subjects 2 to 5 are SUB. The subjects 1, 2, 3, 4, and 5 illustrated in Fig. 9B respectively correspond to the subjects 951, 952, 953, 954, and 955 illustrated in Fig. 9A.

In a case where the subject information 950 illustrated in Fig. 9B is input, the composition determination unit 124 applies the plurality-subjects composition mode in the flowchart illustrated in Fig. 4.

As described above, it is possible to apply the all-subjects composition mode, the standing-subject composition mode, or the sitting-subject composition mode in advance in the plurality-subjects composition mode.

For example, in a case where the all-subjects composition mode is applied in the plurality-subjects composition mode, the PTZ value calculation unit 125 calculates pan and tilt values so that the centroid position of the face rectangles of all the subjects is placed at the center of the imaging range. The PTZ value calculation unit 125 calculates a zoom value so that the ratio of the width of each subject (the width of the circumscribed rectangle of the face) to the width of the imaging range falls within a predetermined range. In the case of the subject information 950 illustrated in Fig. 9B, the PTZ value calculation unit 125 calculates pan and tilt values so that the centroid of the face rectangles of the five subjects 951 to 955 is placed within the imaging range. As the face orientations of all the five subjects 951 to 955 are RIGHT (rightward), the PTZ value calculation unit 125 calculates pan and tilt values so that the imaging range is shifted toward the gaze direction based on the face orientations of the five subjects 951 to 955 by a predetermined amount. In this example, the predetermined amount by which the imaging range is shifted based on the face orientations may be a shift amount that is predetermined or a shift amount that is based on the angles of the face orientations with respect to the forward direction. The PTZ value calculation unit 125 may calculate a zoom value to prevent the subjects 951 to 955 from exiting the imaging range. In the example illustrated in Figs. 9A and 9B, it is also possible not to use the face orientation composition in conjunction.

Then, the PTZ control unit 114 controls PTZ drives based on the PTZ values calculated by the PTZ value calculation unit 125. This adjusts the imaging range of the imaging apparatus 100 to an imaging range 905 illustrated in Fig. 9A.

Further, for example, in a case where the standing-subject composition mode is applied in the plurality-subjects composition mode, the PTZ value calculation unit 125 calculates pan and tilt values so that the centroid position of the face rectangles of the standing subjects is placed at the center of the imaging range. The PTZ value calculation unit 125 calculates a zoom value so that the ratio of the width of each standing subject (the width of the circumscribed rectangle of the face) to the width of the imaging range falls within a predetermined range. In the case of the subject information 950 illustrated in Fig. 9B, the PTZ value calculation unit 125 calculates pan and tilt values so that the centroid of the face rectangles of the standing subjects 951 and 954 is placed at the center of the imaging range. In a case where the face-orientation composition mode is used in conjunction, since the face orientations of the subjects 951 and 954 are RIGHT (rightward), the PTZ value calculation unit 125 calculates pan and tilt values so that the imaging range is shifted in the rightward gaze direction, which corresponds to the face orientations of the subjects 951 and 954, by a predetermined amount. As in the above-described examples, the shift amount in this example may be a shift amount that is predetermined or a shift amount that is based on the angles of the face orientations with respect to the forward direction. The PTZ value calculation unit 125 may calculate a zoom value to prevent the subjects from exiting the imaging range. In this example, it is also possible not to use the face orientation composition in conjunction.

Then, the PTZ control unit 114 controls PTZ drives based on the PTZ values calculated by the PTZ value calculation unit 125. This adjusts the imaging range of the imaging apparatus 100 to an imaging range 906 illustrated in Fig. 9A.

Further, for example, in a case where the sitting-subject composition mode is applied in the plurality-subjects composition mode, the PTZ value calculation unit 125 calculates pan and tilt values so that the centroid position of the face rectangles of the sitting subjects is placed at the center of the imaging range. The PTZ value calculation unit 125 calculates a zoom value so that the ratio of the width of each sitting subject (the width of the circumscribed rectangle of the face) to the width of the imaging range falls within a predetermined range. In the case of the subject information 950 illustrated in Fig. 9B, the PTZ value calculation unit 125 calculates pan and tilt values so that the centroid of the face rectangles of the sitting subjects 952, 953, and 955 is placed at the center of the imaging range. In a case where the face-orientation composition mode is used in conjunction, since the face orientations of the subjects 952, 953, and 955 are RIGHT (rightward), the PTZ value calculation unit 125 calculates pan and tilt values so that the imaging range is shifted in the rightward gaze direction, which corresponds to the face orientations of the subjects 952, 953, and 955. As in the above-described examples, the shift amount in this example may be a shift amount that is predetermined or a shift amount that is based on the angles of the face orientations with respect to the forward direction. The PTZ value calculation unit 125 may calculate a zoom value to prevent the subjects from exiting the imaging range. In this example, it is also possible not to use the face orientation composition in conjunction.

Then, the PTZ control unit 114 controls PTZ drives based on the PTZ values calculated by the PTZ value calculation unit 125. This adjusts the imaging range of the imaging apparatus 100 to an imaging range 907 illustrated in Fig. 9A.

In the case where the face-orientation composition mode is used in conjunction in the plurality-subjects composition mode, the face orientation determination may be performed by averaging the face orientations of the subjects or using the face orientation of the subject of type MAIN.

While the composition determination unit 124 performs the composition mode determination based on the subject information in the case of the present embodiment, a priority level may be determined in advance for the plurality-subjects composition mode, the subject-posture composition mode, and the subject-orientation composition mode. For example, the plurality-subjects composition mode may be prioritized over the sitting composition mode and the standing composition mode of the subject-posture composition mode. Further, for example, either the face-orientation composition mode or the subject-posture composition mode of the subject-orientation composition mode may be prioritized. The priority level for these composition modes may be set by the user as desired. Furthermore, the composition determination unit 124 according to the present embodiment does not have to perform the composition mode determination for all of the standing composition mode, the sitting composition mode, the plurality-subjects composition mode, and the like and may determine two or more composition modes.

### Second Embodiment

In a second embodiment, an example will be described in which the standing composition mode or the sitting composition mode is used in conjunction in the plurality-subjects composition mode and the imaging direction and zoom magnification (zoom position) are controlled in a case where there is a change in posture of each subject, such as standing or sitting. The imaging apparatus 100 according to the second embodiment has configurations similar to those illustrated in Figs. 1 and 2 described above, and processing flows of the imaging apparatus 100 are similar to those in the flowcharts illustrated in Figs. 3 and 4 described above. Accordingly, illustrations and detailed description thereof are omitted.

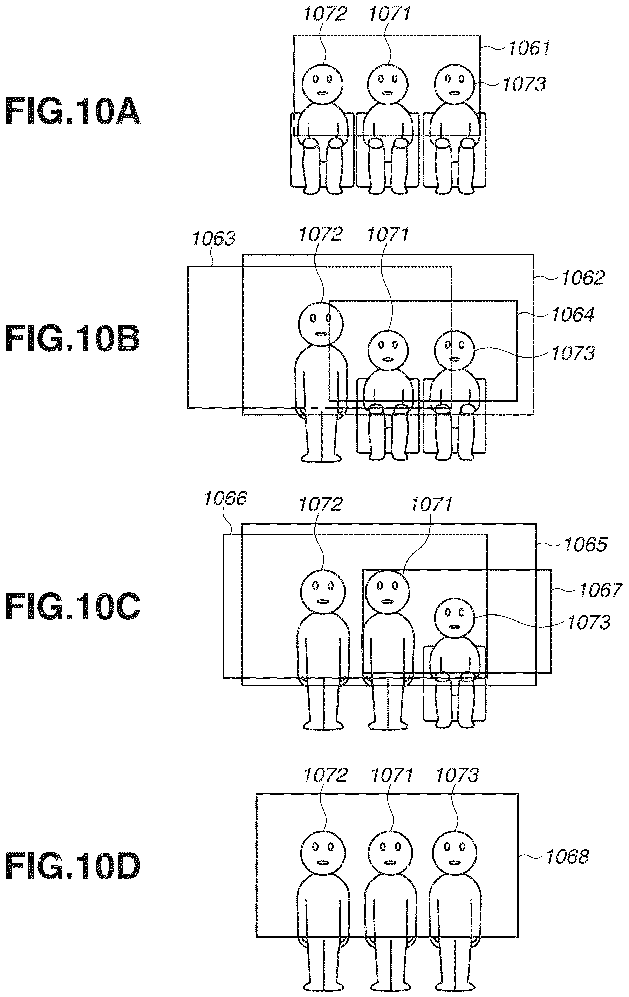

Figs. 10A to 10D are diagrams illustrating examples of images input to the subject detection unit 121. Fig. 10A is a diagram illustrating an example of an image in which sitting subjects 1071, 1072, and 1073 having a front face orientation are captured. Fig. 10B is a diagram illustrating an example of an image in which the standing subject 1072 having a front face orientation and the sitting subjects 1071 and 1073 having a front face orientation are captured. Fig. 10C is a diagram illustrating an example of an image in which the standing subjects 1071 and 1072 having a front face orientation and the sitting subject 1073 having a front face orientation are captured. Fig. 10D is a diagram illustrating an example of an image in which the standing subjects 1071, 1072, and 1073 having a front face orientation are captured. The subject detection unit 121 acquires subject information similar to that described above in the first embodiment.

In the case of the image illustrated in Fig. 10A, the composition determination unit 124 applies the plurality-subjects composition mode in the flowchart illustrated in Fig. 4. Accordingly, the PTZ value calculation unit 125 calculates pan and tilt values so that a centroid of circumscribed rectangles corresponding to face rectangles of the subjects 1071, 1072, and 1073 is placed at the center of the imaging range in the flowchart illustrated in Fig. 3.

As the subject information for each of the subjects 1071, 1072, and 1073 indicates SITTING (sitting), the composition determination unit 124 uses the sitting composition mode in conjunction. In the sitting composition mode, as described above in the first embodiment, a subject is captured at a size greater than a size at which the subject is captured in the standing composition mode. The PTZ value calculation unit 125 calculates a zoom value so that the ratio of the width of the circumscribed rectangle of the faces of the subjects 1071 to 1073 to the width of the imaging range falls within a predetermined range and the width of the imaging range is less than the width of the imaging range in the standing composition mode.

Then, the PTZ control unit 114 controls PTZ drives based on the PTZ values calculated by the PTZ value calculation unit 125, thereby causing the pan drive unit 103, the tilt drive unit 104, and the lens drive unit 102 to perform pan, tilt, and zoom drives, respectively. This adjusts the imaging range of the imaging apparatus 100 to an imaging range 1061 illustrated in Fig. 10A. The PTZ calculation method performed by the PTZ value calculation unit 125 is merely an example, and any method capable of calculating PTZ values so that the subjects 1071 to 1073 are included within the imaging range 1061 may be employed.

In the case of the image illustrated in Fig. 10B, the composition determination unit 124 determines the plurality-subjects composition mode in the flowchart illustrated in Fig. 4.

In this case, if the all-subjects composition mode is applied in the plurality-subjects composition mode, the PTZ value calculation unit 125 calculates pan and tilt values so that the centroid of the circumscribed rectangles corresponding to the face rectangles of the subjects 1071 to 1073 is placed at the center of the imaging range in the flowchart illustrated in Fig. 3. The PTZ value calculation unit 125 calculates a zoom value so that the ratio of the width of the circumscribed rectangle of the faces of the subjects 1071 to 1073 to the width of the imaging range falls within a predetermined range.

Then, the PTZ control unit 114 controls PTZ drives based on the PTZ values calculated by the PTZ value calculation unit 125. This adjusts the imaging range of the imaging apparatus 100 to an imaging range 1062 illustrated in Fig. 10B. The PTZ calculation method performed by the PTZ value calculation unit 125 is merely an example, and any method capable of calculating PTZ values so that the subjects 1071 to 1073 are included within the imaging range 1062 may be employed.

In a case where the standing-subject composition mode is applied in the plurality-subjects composition mode, the PTZ value calculation unit 125 calculates pan and tilt values so that the centroid of the circumscribed rectangle of the face of the standing subject 1072 is placed at the center of the imaging range in the flowchart illustrated in Fig. 3. The PTZ value calculation unit 125 calculates a zoom value so that the ratio of the width of the face rectangle of the standing the subject 1072 to the width of the imaging range falls within a predetermined range.

Then, the PTZ control unit 114 controls PTZ drives based on the PTZ values calculated by the PTZ value calculation unit 125. This adjusts the imaging range of the imaging apparatus 100 to an imaging range 1063 illustrated in Fig. 10B.

In a case where the sitting-subject composition mode is applied in the plurality-subjects composition mode, the PTZ value calculation unit 125 calculates pan and tilt values so that the centroid of the circumscribed rectangles corresponding to the face rectangles of the sitting subjects 1071 and 1073 is placed at the center of the imaging range in the flowchart illustrated in Fig. 3. The PTZ value calculation unit 125 calculates a zoom value so that the ratio of the width of the face rectangle of the sitting subjects 1071 and 1073 to the width of the imaging range falls within a predetermined range.

Then, the PTZ control unit 114 controls PTZ drives based on the PTZ values calculated by the PTZ value calculation unit 125. This adjusts the imaging range of the imaging apparatus 100 to an imaging range 1064 illustrated in Fig. 10B.

In the case of the image illustrated in Fig. 10C, the composition determination unit 124 applies the plurality-subjects composition mode in the flowchart illustrated in Fig. 4.

For example, in a case where the all-subjects composition mode is applied in the plurality-subjects composition mode, the PTZ value calculation unit 125 calculates pan and tilt values so that the centroid of the circumscribed rectangles corresponding to the face rectangles of the subjects 1071 to 1073 is placed at the center of the imaging range in the flowchart illustrated in Fig. 3, as described above. The PTZ value calculation unit 125 calculates a zoom value so that the ratio of the width of the circumscribed rectangle of the faces of the subjects 1071 to 1073 to the width of the imaging range falls within a predetermined range.

Then, the PTZ control unit 114 controls PTZ drives based on the PTZ values calculated by the PTZ value calculation unit 125. This adjusts the imaging range of the imaging apparatus 100 to an imaging range 1065 illustrated in Fig. 10C.

In a case where the standing-subject composition mode is applied in the plurality-subjects composition mode, the PTZ value calculation unit 125 calculates pan and tilt values so that the centroid of the circumscribed rectangles corresponding to the face rectangles of the standing subjects 1071 and 1072 is placed at the center of the imaging range in the flowchart illustrated in Fig. 3. The PTZ value calculation unit 125 calculates a zoom value so that the ratio of the width of the face rectangle of the standing subjects 1071 and 1072 to the width of the imaging range falls within a predetermined range.

Then, the PTZ control unit 114 controls PTZ drives based on the PTZ values calculated by the PTZ value calculation unit 125. This adjusts the imaging range of the imaging apparatus 100 to an imaging range 1066 illustrated in Fig. 10C.

In a case where the sitting-subject composition mode is applied in the plurality-subjects composition mode, the PTZ value calculation unit 125 calculates pan and tilt values so that the centroid of the circumscribed rectangle of the face of the sitting subject 1073 is placed at the center of the imaging range in the flowchart illustrated in Fig. 3. The PTZ value calculation unit 125 calculates a zoom value so that the ratio of the width of the face rectangle of the sitting subject 1073 to the width of the imaging range falls within a predetermined range.

Then, the PTZ control unit 114 controls PTZ drives based on the PTZ values calculated by the PTZ value calculation unit 125. This adjusts the imaging range of the imaging apparatus 100 to an imaging range 1067 illustrated in Fig. 10C.

In the case of the image illustrated in Fig. 10D, the composition determination unit 124 determines the plurality-subjects composition mode in the flowchart illustrated in Fig. 4. Accordingly, the PTZ value calculation unit 125 calculates pan and tilt values so that the centroid of the circumscribed rectangles corresponding to the face rectangles of the subjects 1071, 1072, and 1073 is placed at the center of the imaging range in the flowchart illustrated in Fig. 3.

As the subject information for each of the subjects 1071, 1072, and 1073 indicates STANDING (standing), the composition determination unit 124 also uses the standing composition mode in conjunction. In the standing composition mode, as described above in the first embodiment, a subject is captured at a size smaller than a size at which the subject is captured in the sitting composition mode. The PTZ value calculation unit 125 calculates a zoom value so that the ratio of the width of the circumscribed rectangle of the faces of the subjects 1071 to 1073 to the width of the imaging range falls within a predetermined range and the width of the imaging range is greater than the width of the imaging range in the sitting composition mode.

Then, the PTZ control unit 114 controls PTZ drives based on the PTZ values calculated by the PTZ value calculation unit 125. This adjusts the imaging range of the imaging apparatus 100 to an imaging range 1068 illustrated in Fig. 10D. The PTZ calculation method performed by the PTZ value calculation unit 125 is merely an example, and any method capable of calculating PTZ values so that the subjects 1071 to 1073 are included within the imaging range 1068 may be employed.

As described above, in the second embodiment, in a case where all subjects are in a sitting posture, the sitting composition mode is used in conjunction, and in a case where all subjects are in a standing posture, the standing composition mode is used in conjunction. In all other cases, a composition mode selected from the group consisting of the all-subjects composition mode, the standing-subject composition mode, and the sitting-subject composition mode is used.

### Third Embodiment

In a third embodiment, an example will be described in which a predetermined region is set in advance in the plurality-subjects composition mode and the imaging direction and zoom magnification (zoom position) are controlled based on the set region. In the third embodiment, an example will be described in which a priority region that is prioritized over a subject for inclusion in the imaging range is set as the predetermined region and PTZ control is performed based on the set-region composition mode. In other words, the priority region refers to a region for which the imaging direction and zoom magnification are controlled to ensure that the priority region is included within the imaging range. The imaging apparatus 100 according to the third embodiment has configurations similar to those illustrated in Figs. 1 and 2 described above, and processing flows of the imaging apparatus 100 are similar to those in the flowcharts illustrated in Figs. 3 and 4 described above. Accordingly, illustrations and detailed description thereof are omitted.

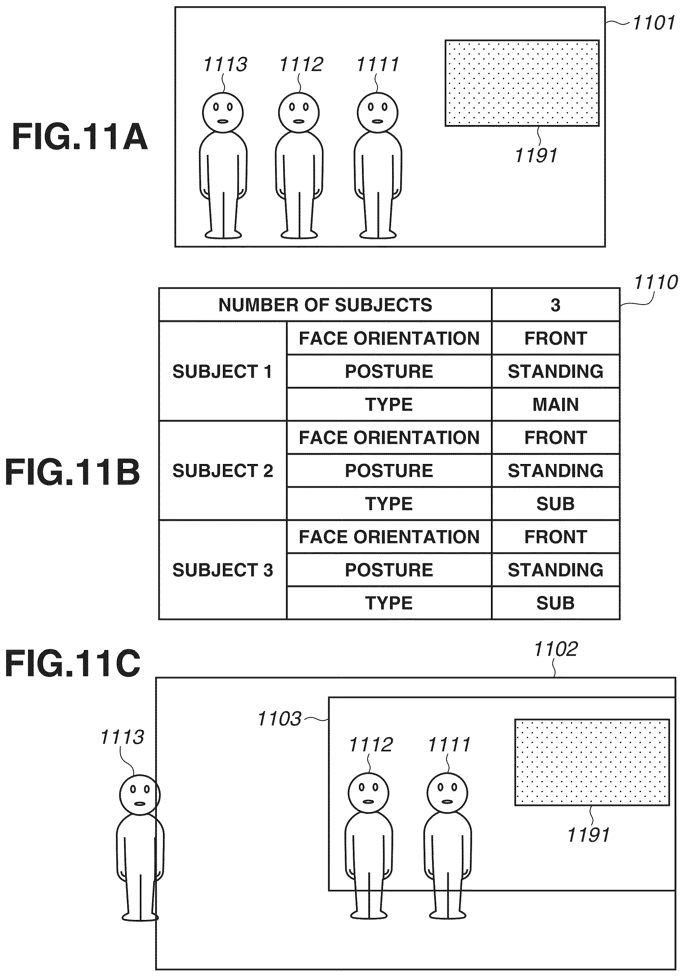

Fig. 11A is a diagram illustrating an example of the image input to the subject detection unit 121. Fig. 11A illustrates an example of an image in which standing subjects 1111, 1112, and 1113 having a front face orientation are captured. In the example illustrated in Fig. 11A, a priority region 1191 is set in advance to be prioritized over the subjects 1111 to 1113 for inclusion in the imaging range.

Fig. 11B is a diagram illustrating an example of subject information 1110 acquired from the image illustrated in Fig. 11A. The subject information 1110 illustrated as an example in Fig. 11B includes information indicating that the number of subjects is "3", the face orientations of the subjects 1 to 3 are "FRONT" (forward), the postures of the subjects 1 to 3 are "STANDING" (standing), the type of the subject 1 is "MAIN", and the types of the subjects 2 and 3 are "SUB". The subjects 1, 2, and 3 illustrated in Fig. 11B respectively correspond to the subjects 1111, 1112, and 1113 illustrated in Fig. 11A. Fig. 11C is a diagram illustrating an example of an image in which, for example, the subject 1113 has moved after the capture of the image illustrated in Fig. 11A.

In the case of the image illustrated in Fig. 11A, the composition determination unit 124 applies the plurality-subjects composition mode in the flowchart illustrated in Fig. 4.

In this case, if the priority region 1191 is set, the PTZ value calculation unit 125 calculates PTZ values for including the subjects 1111, 1112, and 1113 and the priority region 1191 within the imaging range in the flowchart illustrated in Fig. 3. For example, the PTZ value calculation unit 125 calculates pan and tilt values so that a centroid of circumscribed rectangles corresponding to face rectangles of the subjects 1111 to 1113 and a circumscribed rectangle of the priority region 1191 is placed at the center of the imaging range. The circumscribed rectangles corresponding to the face rectangles of the subjects 1111 to 1113 may be, for example, circumscribed rectangles enlarged by a predetermined ratio. The PTZ value calculation unit 125 calculates a zoom value so that the width of a rectangle including the circumscribed rectangles corresponding to the face rectangles of the subjects 1111 to 1113 and the circumscribed rectangle of the priority region 1191 fits within the imaging range based on the calculated pan and tilt values. This is merely an example, and any calculation algorithm capable of including the subjects 1111 to 1113 and the priority region 1191 within the imaging range may be employed.

Then, the PTZ control unit 114 controls PTZ drives based on the PTZ values calculated by the PTZ value calculation unit 125. In the case of the image illustrated in Fig. 11A, the imaging range of the imaging apparatus 100 is an imaging range 1101 including the subject 1111, 1112, 1113 and the priority region 1191.

Next, in a case where the subject 1113 has moved as illustrated in Fig. 11C, the composition determination unit 124 applies the plurality-subjects composition mode, and the PTZ value calculation unit 125 calculates PTZ values to include the subjects 1111 to 1113 and the priority region 1191 within the imaging range. Then, the PTZ control unit 114 controls PTZ drives based on the PTZ values calculated by the PTZ value calculation unit 125.

In the case of the image illustrated in Fig. 11C, for example, increasing the zoom value toward the wide end (zooming out) may cause a subject to appear excessively small in the captured image, which may make it difficult for the subject detection unit 121 to detect the subject. In other words, zooming out may make it impossible to detect the subjects 1111 and 1112 and the like.

In such cases, the PTZ value calculation unit 125 calculates PTZ values so that the imaging range includes the priority region 1191 and the subjects 1111 and 1112 close to the priority region 1191 are captured at a size detectable by the subject detection unit 121.

Then, the PTZ control unit 114 controls PTZ drives based on the PTZ values calculated by the PTZ value calculation unit 125. In the case of the example illustrated in Fig. 11C, the imaging range of the imaging apparatus 100 is an imaging range 1103 including the subjects 1111 and 1112 and the priority region 1191.

### Fourth Embodiment

In a fourth embodiment, an example will be described in which a fixed angle-of-view region is set as another example of the predetermined region that is set in advance in the plurality-subjects composition mode and the imaging direction and zoom magnification (zoom position) are controlled based on the fixed angle-of-view region. Specifically, in the fourth embodiment, an example will be described in which PTZ control is performed based on the plurality-subjects composition mode and the set-region composition mode with the fixed angle-of-view region being set. The fixed angle-of-view region herein refers to a region configured to be set as an imaging range in a case where a subject of type MAIN (i.e., a main tracking target subject) enters the region. In other words, the imaging direction and zoom magnification are controlled so that the fixed angle-of-view region is included within the imaging range in a case where a tracking target subject enters the fixed angle-of-view region. Furthermore, in a case where the tracking target subject in the fixed angle-of-view region exits the fixed angle-of-view region, the imaging direction and zoom magnification are controlled so that the tracking target subject is tracked. The imaging apparatus 100 according to the fourth embodiment has configurations similar to those illustrated in Figs. 1 and 2 described above, and processing flows of the imaging apparatus 100 are similar to those in the flowcharts illustrated in Figs. 3 and 4 described above. Accordingly, illustrations and detailed description thereof are omitted.

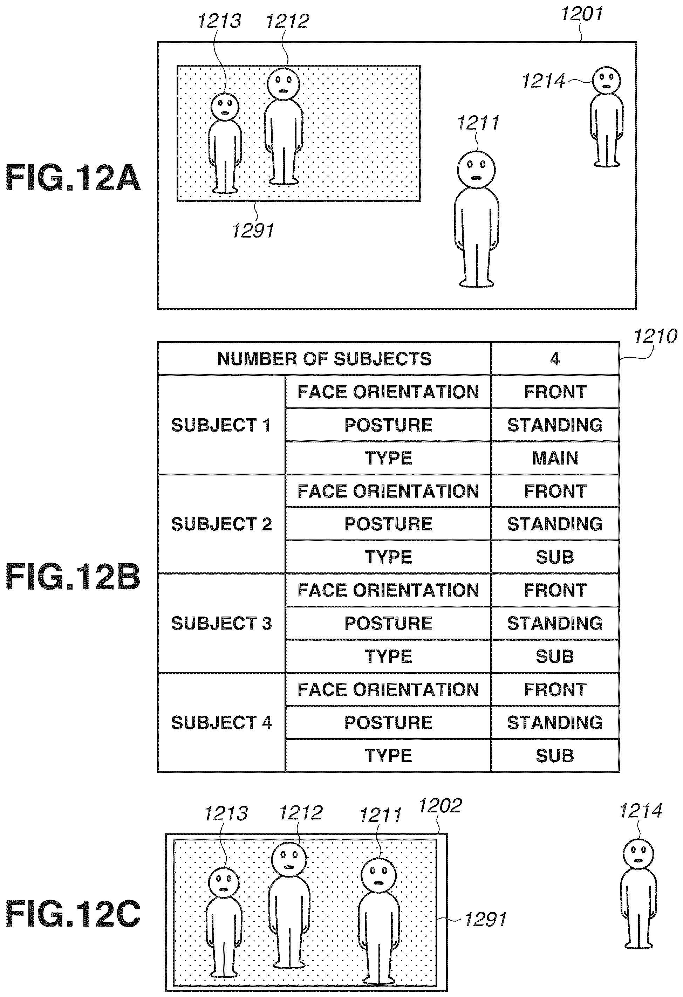

Fig. 12A is a diagram illustrating an example of the image input to the subject detection unit 121. Fig. 12A illustrates an example of an image in which standing subjects 1211, 1212, 1213, and 1214 having a front face orientation are captured. In the example illustrated in Fig. 12A, a fixed angle-of-view region 1291 is set. Fig. 12B is a diagram illustrating an example of subject information 1210 acquired from the image illustrated in Fig. 12A. The subject information 1210 illustrated as an example in Fig. 12B includes information indicating that the number of subjects is "4", the face orientations of the subjects 1 to 4 are "FRONT" (forward), the postures of the subjects 1 to 4 are "STANDING" (standing), the type of the subject 1 is "MAIN", and the types of the subjects 2 to 4 are "SUB". The subjects 1, 2, 3, and 4 illustrated in Fig. 12B respectively correspond to the subjects 1211, 1212, 1213, and 1214 illustrated in Fig. 12A. Fig. 12C is a diagram illustrating an example of an image in which the subject 1211 has moved into the fixed angle-of-view region 1291 from the state illustrated in Fig. 12A.

In the case of the image illustrated in Fig. 12A, the composition determination unit 124 applies the plurality-subjects composition mode in the flowchart illustrated in Fig. 4. In the case of the example illustrated in Fig. 12A, the PTZ value calculation unit 125 calculates PTZ values so that the subject 1211 of type MAIN and the other subjects 1212 to 1214 are included within the imaging range in the flowchart illustrated in Fig. 3. Specifically, the PTZ value calculation unit 125 calculates pan and tilt values so that a centroid of face rectangles of the subjects 1211 to 1214 is placed at the center of the imaging range, and calculates a zoom value so that the ratio of the width of the circumscribed rectangle of each face rectangle to the width of the imaging range falls within a predetermined range. This is merely an example, and any calculation algorithm capable of including the subjects 1211 to 1214 within the imaging range may be employed.

Then, the PTZ control unit 114 controls PTZ drives based on the PTZ values calculated by the PTZ value calculation unit 125. In the case of the image illustrated in Fig. 12A, the imaging range of the imaging apparatus 100 is an imaging range 1201 including the subjects 1211 to 1214.

Next, in a case where the subject 1211 of type MAIN enters the fixed angle-of-view region 1291 as illustrated in Fig. 12C, the composition determination unit 124 applies the plurality-subjects composition mode. The PTZ value calculation unit 125 at this time calculates PTZ values so that the fixed angle-of-view region 1291 including the subject 1211 of type MAIN is set as the imaging range. In this case, the subjects 1211, 1212, and 1213 present in the fixed angle-of-view region 1291 are included within the imaging range, whereas the subject 1214 outside the fixed angle-of-view region 1291 is excluded from the imaging range. Whether the subject 1211 of type MAIN has entered the fixed angle-of-view region 1291 is determined based on whether a center position or an entire face rectangle of the subject 1211 indicated as type MAIN in the subject information 1210 is within the fixed angle-of-view region 1291.

Then, the PTZ control unit 114 controls PTZ drives based on the PTZ values calculated by the PTZ value calculation unit 125. In the case of the example illustrated in Fig. 12C, the imaging range of the imaging apparatus 100 is an imaging range 1202 corresponding to the fixed angle-of-view region 1291.

While the fixed angle-of-view region 1291 is set as the imaging range in a case where the subject 1211 of type MAIN enters the fixed angle-of-view region 1291 in the above-described example, the fixed angle-of-view region 1291 may be set as the imaging range in a case where, for example, all the subjects 1211 to 1214 enter the fixed angle-of-view region 1291.

### Fifth Embodiment

In a fifth embodiment, an example will be described in which a tracking termination region is set as another example of the predetermined region that is set in advance in the plurality-subjects composition mode and the imaging direction and zoom magnification (zoom position) are controlled based on the tracking termination region. Specifically, in the fifth embodiment, an example will be described in which PTZ control is performed based on the plurality-subjects composition mode and the set-region composition mode with the tracking termination region being set. According to the present embodiment, the tracking termination region herein refers to a region configured so that if a subject enters the region, the type of the subject in a tracking setting is changed or the subject having entered the region is no longer detected, or refers to a region configured so that tracking of the subject having entered the region is terminated. According to the present embodiment, in a case where a subject of type MAIN enters the tracking termination region, the type of the subject is changed to SUB, and the type of another subject outside the tracking termination region is changed to MAIN. In a case where a subject of type SUB enters the tracking termination region, the subject is excluded from the subject detection target by the subject detection unit 121 (the subject is no longer detected). The imaging apparatus 100 according to the fifth embodiment has configurations similar to those illustrated in Figs. 1 and 2 described above, and processing flows of the imaging apparatus 100 are similar to those in the flowcharts illustrated in Figs. 3 and 4 described above. Accordingly, illustrations and detailed description thereof are omitted.

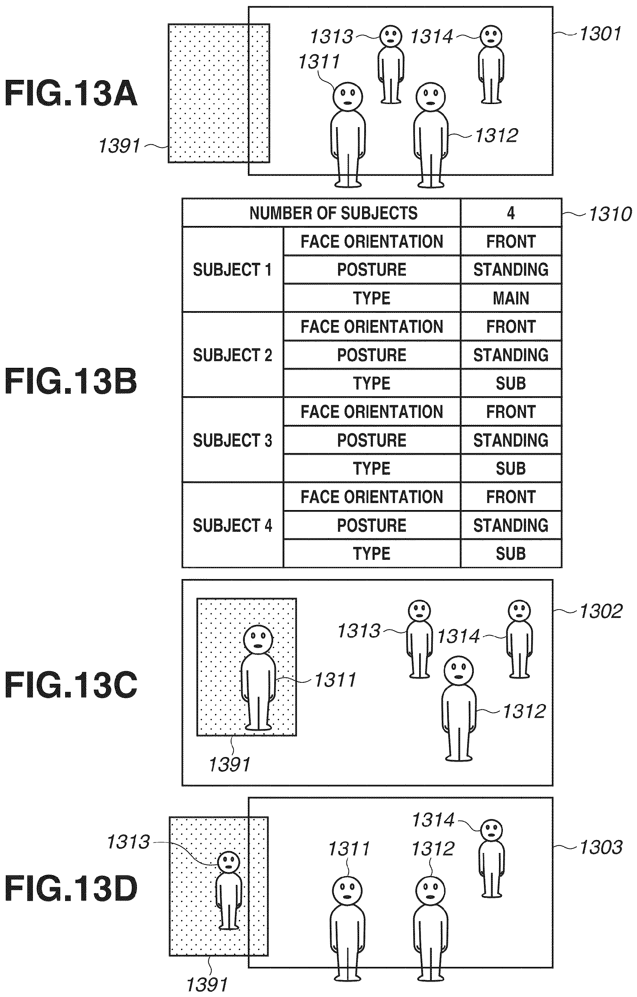

Fig. 13A is a diagram illustrating an example of the image input to the subject detection unit 121. Fig. 13A illustrates an example of an image in which standing subjects 1311, 1312, 1313, and 1314 having a front face orientation are captured. In the example illustrated in Fig. 13A, a tracking termination region 1391 is set. Fig. 13B is a diagram illustrating an example of subject information 1310 acquired from the image illustrated in Fig. 13A. The subject information 1310 illustrated as an example in Fig. 13B includes information indicating that the number of subjects is "4", the face orientations of the subjects 1 to 4 are "FRONT" (forward), the postures of the subjects 1 to 4 are "STANDING" (standing), the type of the subject 1 is "MAIN", and the types of the subjects 2 to 4 are "SUB". The subjects 1, 2, 3, and 4 illustrated in Fig. 13B respectively correspond to the subjects 1311, 1312, 1313, and 1314 illustrated in Fig. 13A. Fig. 13C is a diagram illustrating an example of an image in which the subject 1311 of type MAIN has moved into the tracking termination region 1391 from the state illustrated in Fig. 13A. Fig. 13D is a diagram illustrating an example of an image in which the subject 1313 of type SUB has moved into the tracking termination region 1391 from the state illustrated in Fig. 13A.

In the case of the image illustrated in Fig. 13A, the composition determination unit 124 applies the plurality-subjects composition mode in the flowchart illustrated in Fig. 4. In the case of the example illustrated in Fig. 13A, the PTZ value calculation unit 125 calculates PTZ values so that the subjects 1311, 1312, 1313, and 1314 are included within the imaging range in the flowchart illustrated in Fig. 3. Specifically, the PTZ value calculation unit 125 calculates pan and tilt values so that a centroid of face rectangles of the subjects 1311 to 1314 is placed at the center of the imaging range, and calculates a zoom value so that the ratio of the width of the circumscribed rectangle of each face rectangle to the width of the imaging range falls within a predetermined range. This is merely an example, and any calculation algorithm capable of including the subjects 1311 to 1314 within the imaging range may be employed.

Then, the PTZ control unit 114 controls PTZ drives based on the PTZ values calculated by the PTZ value calculation unit 125. In the case of the image illustrated in Fig. 13A, the imaging range of the imaging apparatus 100 is an imaging range 1301 including the subjects 1311 to 1314.

In this case, if the subject 1311 of type MAIN enters the tracking termination region 1391 as illustrated in Fig. 13C, the PTZ value calculation unit 125 calculates PTZ values so that the subjects 1311, 1312, 1313, and 1314 are included within the imaging range. At that time, the subject detection unit 121 changes the type of the subject 1311 from MAIN to SUB and changes the type of, for example, the foremost subject 1313, among the subjects 1312, 1313, and 1314, from SUB to MAIN. As a result, the tracking processing unit 122 performs tracking so that the subject 1313 for which the type has been changed to MAIN is prioritized for inclusion in the imaging range. Whether the subject 1311 of type MAIN has entered the tracking termination region 1391 is determined based on whether a center position or an entire face rectangle of the subject 1311 indicated as type MAIN in the subject information 1310 is within the tracking termination region 1391.

Then, the PTZ control unit 114 controls PTZ drives based on the PTZ values calculated by the PTZ value calculation unit 125. In the case of the example illustrated in Fig. 13C, the imaging range of the imaging apparatus 100 is an imaging range 1302.

In a case where the subject 1313 of type SUB enters the tracking termination region 1391 as illustrated in Fig. 13D, the subject detection unit 121 excludes the subject 1313 having entered the tracking termination region 1391 from the subject detection target. Further, the PTZ value calculation unit 125 at this time calculates PTZ values so that the subjects 1311, 1312, and 1314 excluding the subject 1313 excluded from the subject detection target are included within the imaging range. Whether the subject 1313 of type SUB has entered the tracking termination region 1391 is determined based on whether a center position or an entire face rectangle of the subject 1313 indicated as type SUB in the subject information 1310 is within the tracking termination region 1391.

Then, the PTZ control unit 114 controls PTZ drives based on the PTZ values calculated by the PTZ value calculation unit 125. In the case of the example illustrated in Fig. 13D, the imaging range of the imaging apparatus 100 is the imaging range 1303.

### Sixth Embodiment

In a sixth embodiment, an example will be described in which an automatic selection region is set as another example of the predetermined region that is set in advance in the plurality-subjects composition mode and the imaging direction and zoom magnification (zoom position) are controlled based on the automatic selection region. Specifically, in the sixth embodiment, an example will be described in which PTZ control is performed based on the plurality-subjects composition mode and the set-region composition mode with the automatic selection region being set. According to the present embodiment, the automatic selection region herein refers to a region configured so that if a subject enters or exits the region, the type of the subject in the tracking setting is changed. According to the present embodiment, in a case where a subject of type MAIN enters the automatic selection region, the type of the subject is changed to SUB, and in a case where a subject of type SUB enters the automatic selection region, the type of the subject is changed to MAIN. In a case where a subject of type MAIN exits the automatic selection region, the type of the subject is changed to SUB, and in a case where a subject of type SUB exits the automatic selection region, the type of the subject is changed to MAIN. The imaging apparatus 100 according to the sixth embodiment has configurations similar to those illustrated in Figs. 1 and 2 described above, and processing flows of the imaging apparatus 100 are similar to those in the flowcharts illustrated in Figs. 3 and 4 described above. Accordingly, illustrations and detailed description thereof are omitted.

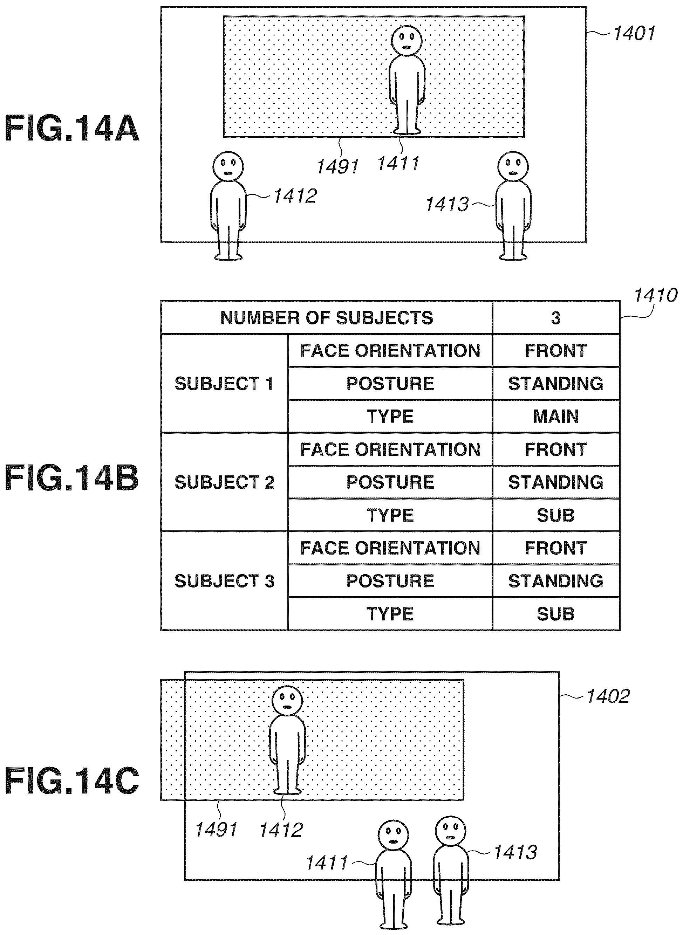

Fig. 14A is a diagram illustrating an example of the image input to the subject detection unit 121. Fig. 14A illustrates an example of an image in which standing subjects 1411, 1412, and 1413 having a front face orientation are captured. In the example illustrated in Fig. 14A, an automatic selection region 1491 is set. Fig. 14B is a diagram illustrating an example of subject information 1410 acquired from the image illustrated in Fig. 14A. The subject information 1410 illustrated as an example in Fig. 14B includes information indicating that the number of subjects is "3", the face orientations of the subjects 1 to 3 are "FRONT" (forward), the postures of the subjects 1 to 3 are "STANDING" (standing), the type of the subject 1 is "MAIN", and the types of the subjects 2 and 3 are "SUB". The subjects 1, 2, and 3 illustrated in Fig. 14B respectively correspond to the subjects 1411, 1412, and 1413 illustrated in Fig. 14A. Fig. 14C is a diagram illustrating an example of an image in which the subject 1411 of type MAIN has exited the automatic selection region 1491 and the subject 1412 of type SUB has entered the automatic selection region 1491 from the state illustrated in Fig. 14A.

In the case of the image illustrated in Fig. 14A, the composition determination unit 124 determines the plurality-subjects composition mode in the flowchart illustrated in Fig. 4. In the case of the example illustrated in Fig. 14A, the PTZ value calculation unit 125 calculates PTZ values so that the subjects 1411, 1412, and 1413 are included within the imaging range in the flowchart illustrated in Fig. 3. Specifically, the PTZ value calculation unit 125 calculates pan and tilt values so that a centroid of face rectangles of the subjects 1411 to 1413 is placed at the center of the imaging range, and calculates a zoom value so that the ratio of the width of the circumscribed rectangle of each face rectangle to the width of the imaging range falls within a predetermined range. This is merely an example, and any calculation algorithm capable of including the subjects 1411 to 1413 within the imaging range may be employed. At that time, the type of the subject 1411 is MAIN, and the types of the subjects 1412 and 1413 are SUB.

Then, the PTZ control unit 114 controls PTZ drives based on the PTZ values calculated by the PTZ value calculation unit 125. In the case of the image illustrated in Fig. 14A, the imaging range of the imaging apparatus 100 is an imaging range 1401 including the subjects 1411 to 1413.

A case where the subject 1411 of type MAIN exits the automatic selection region 1491 and the subject 1412 of type SUB enters the automatic selection region 1491 as illustrated in Fig. 14C will be considered. In this case, the composition determination unit 124 changes the type of the subject 1411 having exited the automatic selection region 1491 from MAIN to SUB and changes the type of the subject 1412 having entered the automatic selection region 1491 from SUB to MAIN. As a result, the tracking processing unit 122 excludes the subject 1411 of type SUB from the tracking target and tracks the subject 1412 of type MAIN as the main tracking target. The PTZ value calculation unit 125 calculates PTZ values so that the subjects 1411, 1412, and 1413 are included within the imaging range in the flowchart illustrated in Fig. 3. Specifically, the PTZ value calculation unit 125 calculates pan and tilt values so that a centroid of face rectangles of the subjects 1411 to 1413 is placed at the center of the imaging range, and calculates a zoom value so that the ratio of the width of the circumscribed rectangle of each face rectangle to the width of the imaging range falls within a predetermined range. Whether the subject 1411 has exited the automatic selection region 1491 is determined based on whether a center position or an entire face rectangle of the subject 1411 in the subject information 1410 is outside the automatic selection region 1491. Whether the subject 1412 has entered the automatic selection region 1491 is determined based on whether a center position or an entire face rectangle of the subject 1412 in the subject information 1410 is within the automatic selection region 1491.

Then, the PTZ control unit 114 controls PTZ drives based on the PTZ values calculated by the PTZ value calculation unit 125. In the case of the image illustrated in Fig. 14C, the imaging range of the imaging apparatus 100 is the imaging range 1402.

### Seventh Embodiment

In a seventh embodiment, an example will be described in which a selection-excluded region is set as another example of the predetermined region that is set in advance in the plurality-subjects composition mode and the imaging direction and zoom magnification (zoom position) are controlled based on the selection-excluded region. Specifically, in the seventh embodiment, an example will be described in which PTZ control is performed based on the plurality-subjects composition mode and the set-region composition mode with the selection-excluded region being set. According to the present embodiment, the selection-excluded region herein refers to a region configured so that when a subject of type MAIN is selected from a plurality of subjects, any subject present in the region is excluded from being a candidate for the subject of type MAIN. However, for a subject previously determined as type MAIN, the setting as MAIN is maintained even in a case where the subject is within the selection-excluded region. The imaging apparatus 100 according to the seventh embodiment has configurations similar to those illustrated in Figs. 1 and 2 described above, and processing flows of the imaging apparatus 100 are similar to those in the flowcharts illustrated in Figs. 3 and 4 described above. Accordingly, illustrations and detailed description thereof are omitted.

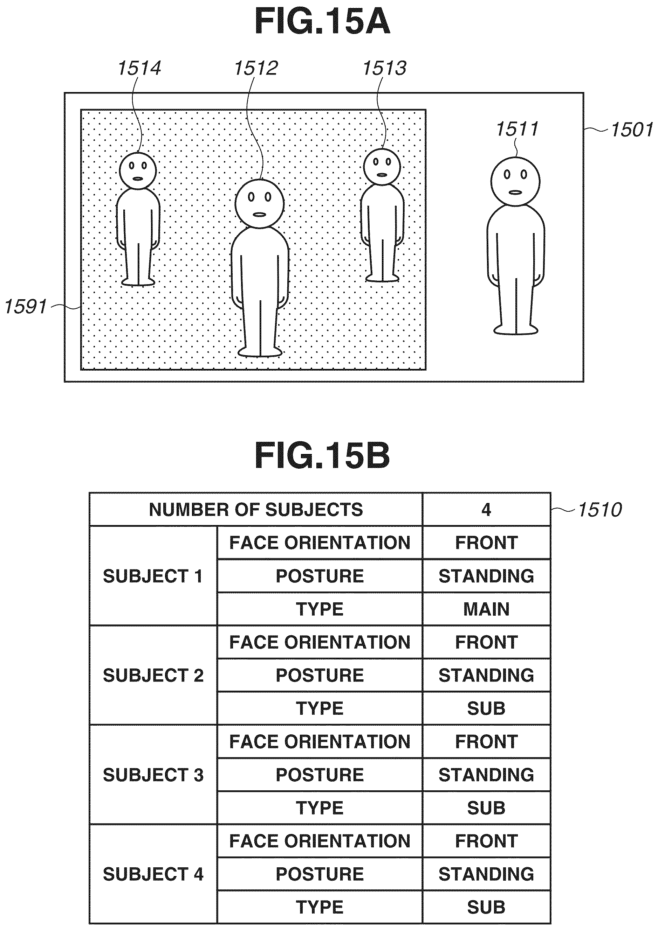

Fig. 15A is a diagram illustrating an example of the image input to the subject detection unit 121. Fig. 15A illustrates an example of an image in which standing subjects 1511, 1512, 1513, and 1514 having a front face orientation are captured. In the example illustrated in Fig. 15A, a selection-excluded region 1591 is set. Fig. 15B is a diagram illustrating an example of subject information 1510 acquired from the image illustrated in Fig. 15A. The subject information 1510 illustrated as an example in Fig. 15B includes information indicating that the number of subjects is "4", the face orientations of the subjects 1 to 4 are "FRONT" (forward), the postures of the subjects 1 to 4 are "STANDING" (standing), the type of the subject 1 is "MAIN", and the types of the subjects 2, 3, and 4 are "SUB". The subjects 1, 2, 3, and 4 illustrated in Fig. 15B respectively correspond to the subjects 1511, 1512, 1513, and 1514 illustrated in Fig. 15A.

In the case of the image illustrated in Fig. 15A, the composition determination unit 124 applies the plurality-subjects composition mode in the flowchart illustrated in Fig. 4. In the case of the example illustrated in Fig. 15A, the PTZ value calculation unit 125 calculates PTZ values so that the subjects 1511, 1512, 1513, and 1514 are included within the imaging range in the flowchart illustrated in Fig. 3. Specifically, the PTZ value calculation unit 125 calculates pan and tilt values so that a centroid of face rectangles of the subjects 1511 to 1514 is placed at the center of the imaging range, and calculates a zoom value so that the ratio of the width of the circumscribed rectangle of each face rectangle to the width of the imaging range falls within a predetermined range.

When selecting a subject of type MAIN from the subjects 1511 to 1514 in the imaging range, the subject detection unit 121 excludes any subject in the selection-excluded region 1591 from being a candidate for the subject of type MAIN. Specifically, in the case of the example illustrated in Fig. 15A, the subject 1511 outside the selection-excluded region 1591 is determined as type MAIN, and the subjects 1512, 1513, and 1514 in the selection-excluded region 1591 are determined as type SUB. As a result, the subject information 1510 includes information as illustrated in Fig. 15B.

In a case where the subject information 1510 illustrated in Fig. 15B is input, the composition determination unit 124 applies the plurality-subjects composition mode in the flowchart illustrated in Fig. 4. Then, the PTZ value calculation unit 125 calculates PTZ values so that the subjects 1511, 1512, 1513, and 1514 are included within the imaging range in the flowchart illustrated in Fig. 3. Specifically, the PTZ value calculation unit 125 calculates pan and tilt values so that a centroid of face rectangles of the subjects 1511 to 1514 is placed at the center of the imaging range, and calculates a zoom value so that the ratio of the width of the circumscribed rectangle of each face rectangle to the width of the imaging range falls within a predetermined range. This is merely an example, and any calculation algorithm capable of including the subjects 1511 to 1514 within the imaging range may be employed. Whether a subject is present within or outside the selection-excluded region 1591 is determined based on whether a center position or an entire face rectangle of the subject in the subject information 1510 is within or outside the selection-excluded region 1591. Even in a case where the subject 1511 previously determined as type MAIN moves into the selection-excluded region 1591, the type of the subject 1511 is not changed to SUB.

Then, the PTZ control unit 114 controls PTZ drives based on the PTZ values calculated by the PTZ value calculation unit 125. In the case of the image illustrated in Fig. 15A, the imaging range of the imaging apparatus 100 is an imaging range 1501 including the subjects 1511 to 1514.

In the second to seventh embodiments, the cases where the face orientation of the subject is front are described as examples. In a case where the face orientation is rightward or leftward, it is also possible to use the plurality-subjects composition mode and the face-orientation composition mode in conjunction, as in the first embodiment.

The controls according to the first to seventh embodiments may be performed individually, or two or more controls may be combined as desired.

The controls according to the first to seventh embodiments are based on the assumption that the image capturing unit 111 of the imaging apparatus 100 periodically performs image capturing (moving image capturing) for each frame. Thus, the subject detection and subject information acquisition by the subject detection unit 121 and the composition mode application by the composition determination unit 124 are updated for each frame of an image captured by the image capturing unit 111. Therefore, in a case where the number of subjects detected by the subject detection unit 121 changes between frames, the composition determination unit 124 automatically switches to the plurality-subjects composition mode, and the PTZ values are updated, and the composition is readjusted.

The imaging apparatus 100 may be configured to change the velocity of the PTZ drives during subject tracking based on a user setting in a case where the plurality-subjects composition mode is applied by the composition determination unit 124. Furthermore, in a case where a subject of type MAIN or SUB exits a detection range of the subject detection unit 121, the composition determination unit 124 may perform control to maintain the composition mode for a predetermined time period and wait for the subject to return. During that time, the PTZ control unit 114 may stand by without changing the composition mode until the subject detection unit 121 performs subject detection again.

As described above, the imaging apparatus 100 according to the present embodiment is configured to perform camera control so that PTZ control is performed dynamically and automatically based on a change in a condition, such as the number of subjects, posture, or face orientation, and the composition is maintained while appropriately tracking a plurality of subjects. For example, the imaging apparatus 100 according to the present embodiment is configured to flexibly handle the presence of a plurality of subjects, the posture/operation of each subject, and special region settings, such as the priority region, the fixed angle-of-view region, the tracking termination region, the automatic selection region, or the selection-excluded region. Further, the imaging apparatus 100 according to the present embodiment is configured to control the imaging range efficiently and flexibly even in a case where frequent changes occur in the number of subjects, posture (standing, sitting), face orientation, or the like. The imaging apparatus 100 according to the present embodiment is configured to respond to advanced imaging needs, such as prioritizing a specific subject from subjects for inclusion in the imaging range or ensuring inclusion of a specific region in a screen. Accordingly, the imaging apparatus 100 according to the present embodiment makes it possible to realize a more dynamic and attractive video representation and prompt imaging with a flexible and optimized composition based on the position, state, or the like of the subject.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

The above-described embodiments are merely examples of implementations of the present disclosure, and the technical scope of the present disclosure should not be construed as limited by these examples. Specifically, the present disclosure may be embodied in various forms without departing from its technical concept or essential features.

The disclosure of the present embodiment includes the following configurations, method, and program.

### (Configuration 1)

An imaging apparatus including an imaging unit and a drive unit configured to drive pan, tilt, and zoom, the imaging apparatus comprising:
a detection unit configured to detect a subject from an image captured by the imaging unit and to acquire subject information regarding the detected subject;
a tracking unit configured to track at least one subject among the subjects;
a composition determination unit configured to apply, based on the subject information, two or more composition modes selected from among a plurality-subjects composition mode for adjusting composition based on a plurality of subjects, a subject orientation composition mode for adjusting composition based on an orientation of the subject, a subject posture composition mode for adjusting composition based on a posture of the subject, and a set-region composition mode for adjusting composition based on a predetermined set region; and
a control unit configured to control the driving of pan, tilt, and zoom by the drive unit based on the composition mode applied by the composition determination unit.

### (Configuration 2)

The imaging apparatus according to configuration 1, wherein, in a case where the number of subjects and the subject information change, the composition determination unit changes the composition mode.

### (Configuration 3)

The imaging apparatus according to configuration 1 or 2,
wherein the imaging apparatus updates the detection of the subject and the acquisition of the subject information by the subject detection unit, and the application of the composition mode by the composition determination unit, for each frame of the image captured by the imaging unit, and
wherein the control unit controls the driving by the driving unit based on the composition mode applied by the update by the composition determination unit.

### (Configuration 4)

The imaging apparatus according to any one of configurations 1 to 3, wherein the composition determination unit preferentially applies the subject orientation composition mode and the subject posture composition mode.

### (Configuration 5)

The imaging apparatus according to any one of configurations 1 to 4,
wherein the composition determination unit applies the subject orientation composition mode and the subject posture composition mode, and
wherein the control unit controls the driving by the driving unit based on the subject orientation composition mode and the subject posture composition mode.

### (Configuration 6)

The imaging apparatus according to configuration 5, wherein, in a case where the composition determination unit applies at least the subject orientation composition mode and the subject posture composition mode among a plurality of composition modes, the control unit controls the driving by the driving unit based on the subject posture composition mode, and then controls the driving by the driving unit based on the subject orientation composition mode.

### (Configuration 7)

The imaging apparatus according to any one of configurations 1 to 6, wherein the composition determination unit preferentially applies the plurality-subjects composition mode to the subject posture composition mode.

### (Configuration 8)

The imaging apparatus according to any one of configurations 1 to 7, wherein, in a case where the composition determination unit applies at least the plurality-subjects composition mode and the subject posture composition mode, the control unit controls the driving by the drive unit based on the plurality-subjects composition mode and the subject posture composition mode.

### (Configuration 9)

The imaging apparatus according to any one of configurations 1 to 8, wherein, when the composition determination unit applies the plurality-subjects composition mode, in a case where a subject in a standing posture and a subject in a seated posture are mixed in the detected plurality of subjects, the control unit controls the driving by the drive unit based on the plurality-subjects composition mode targeting the subject in a standing posture.

### (Configuration 10)

The imaging apparatus according to any one of configurations 1 to 9, wherein, when the composition determination unit applies the plurality-subjects composition mode, in a case where a subject in a standing posture and a subject in a seated posture are mixed in the detected plurality of subjects, the control unit controls the driving by the drive unit based on the plurality-subjects composition mode targeting the subject in a seated posture.

### (Configuration 11)

The imaging apparatus according to any one of configurations 1 to 10, wherein, when the composition determination unit applies the plurality-subjects composition mode, in a case where a subject in a standing posture and a subject in a seated posture are mixed in the detected plurality of subjects, the control unit controls the driving by the drive unit based on the plurality-subjects composition mode targeting the subject in a standing posture and the subject in a seated posture.

### (Configuration 12)

The imaging apparatus according to any one of configurations 1 to 11,
wherein the set region is a priority region to be preferentially included within a imaging range by pan, tilt, and zoom, and
wherein, in a case where the composition determination unit applies at least the plurality-subjects composition mode and the set-region composition mode among a plurality of composition modes, the control unit controls the driving by the drive unit such that the imaging range by pan, tilt, and zoom includes the plurality of subjects and the priority region applied when the composition determination unit applies the plurality-subjects composition mode.

### (Configuration 13)

The imaging apparatus according to any one of configurations 1 to 12,
wherein, in a case where the subject is included in the set region, the set region is a fixed angle-of-view region that fixes the imaging range by pan, tilt, and zoom, and
wherein, in a case where the composition determination unit applies the plurality-subjects composition mode and the set-region composition mode, and in a case where the subject that is a target to be tracked by the tracking unit moves into the fixed angle-of-view region, the control unit controls the driving by the drive unit such that the imaging range by pan, tilt, and zoom matches the fixed angle-of-view region.

### (Configuration 14)

The imaging apparatus according to any one of configurations 1 to 13,
wherein, in a case where the subject is included in the set region, the set region is a tracking stop region that stops tracking by the tracking unit, and
wherein, in a case where the composition determination unit applies the plurality-subjects composition mode and the set-region composition mode,
and in a case where the subject that is a target to be tracked by the tracking unit moves into the tracking stop region, the tracking unit selects a subject to be a target to be tracked from among the subjects outside the tracking stop region.

### (Configuration 15)

The imaging apparatus according to any one of configurations 1 to 14, wherein, in a case where the composition determination unit applies the plurality-of-subjects composition mode and the set-region composition mode, the control unit controls the driving by the drive unit based on the plurality-subjects composition mode targeting the plurality of subjects outside the set region.

### (Configuration 16)

The imaging apparatus according to any one of configurations 1 to 15,
wherein, the subject information includes information indicating whether the detected subject is a main tracking target or a sub-tracking target,
wherein, the set region is a selection region for changing whether the detected subject is a main tracking target or a sub-tracking target regarding the subject information, and
wherein, in a case where the composition determination unit applies the plurality-subjects composition mode and the set-region composition mode, and in a case where the detected subject that is a main tracking target according to the subject information moves outside the selection region, and the detected subject that is a sub-tracking target moves inside the selection region, the tracking unit sets the subject information of the subject that has moved inside the selection region as the main tracking target.

### (Configuration 17)

The imaging apparatus according to any one of configurations 1 to 16,
wherein the subject information includes information indicating whether the detected subject is a main tracking target or a sub-tracking target,
wherein the set region is an exclusion region for determining a subject not to be set as a main tracking target according to the subject information, and
wherein, in a case where the composition determination unit applies the plurality-subjects composition mode and the set-region composition mode, the tracking unit sets the subject information to select a subject to be a main tracking target from among the subjects outside the exclusion region.

### (Method 1)

A control method for an imaging apparatus including an imaging unit and a drive unit configured to drive pan, tilt, and zoom, the method comprising:
detecting a subject from an image captured by the imaging unit and acquiring subject information regarding the detected subject,
tracking at least one subject among the detected subjects,
applying, based on the subject information, two or more composition modes selected from among a plurality-subjects composition mode for adjusting composition based on a plurality of subjects, a subject orientation composition mode for adjusting composition based on an orientation of the subject, a subject posture composition mode for adjusting composition based on a posture of the subject, and a set-region composition mode for adjusting composition based on a predetermined set region, and
controlling the driving of pan, tilt, and zoom by the drive unit based on the composition mode in the applying.

### (Program 1)

A program for causing a computer to function as the imaging apparatus according to any one of configurations 1 to 17.

The present disclosure makes it possible to adjust an imaging range determined by PTZ control of an imaging apparatus to capture a plurality of subjects with a composition suitable for the positions, postures, and the like of the plurality of subjects.

Various embodiments have been described in detail above but it will be understood that the present disclosure is not limited to these embodiments and encompasses all modifications, variants, alternatives and equivalents falling within the scope of the appended claims.

## Claims

1. A control apparatus (100) comprising:
detection means (121) for detecting a subject from an image captured by imaging means (101, 102, 111);
determination means (124) for determining a predetermined composition for capturing the detected subject; and
control means (114) for controlling pan, tilt, and zoom of the imaging means (101, 102, 111) so that the detected subject is captured with the predetermined composition,
wherein the determination means (124) determines the predetermined composition by combining two or more compositions selected from among a first composition based on a plurality of subjects, a second composition based on an orientation of the subject, a third composition based on a posture of the subject, and a fourth composition based on a predetermined set region.

2. The control apparatus (100) according to claim 1, wherein the determination means (124) determines the predetermined composition based on the detected subject.

3. The control apparatus (100) according to claim 1, wherein, in a case where a number of subjects is changed, the determination means (124) changes the combination of the compositions.

4. The control apparatus (100) according to claim 1, wherein in a case where a number of detected subjects is one, the determination means (124) determines the predetermined composition by combining the second composition and the third composition.

5. The control apparatus (100) according to claim 4, wherein the determination means (124) determines the predetermined composition based on the orientation and posture of the subject.

6. The control apparatus (100) according to claim 1, wherein in a case where a number of detected subjects is more than one, the determination means (124) determines the predetermined composition by combining the first composition and the second composition.

7. The control apparatus (100) according to claim 6, wherein the determination means (124) determines the predetermined composition based on a position and orientation of the plurality of subjects.

8. The control apparatus (100) according to claim 1, wherein, in a case where a number of detected subjects is more than one, the determination means (124) determines the predetermined composition by combining the first composition and the third composition.

9. The control apparatus (100) according to claim 8, wherein the determination means (124) determines the predetermined composition based on a position and posture of the plurality of subjects.

10. The control apparatus (100) according to claim 1, wherein, in a case where a number of detected subjects is more than one, the determination means (124) determines the predetermined composition by combining the first composition and the fourth composition.

11. The control apparatus (100) according to claim 10,
wherein the predetermined set region is a priority region (1191) prioritized for inclusion in an imaging range of the imaging means, and
wherein the determination means (124) determines the predetermined composition based on a position of the plurality of subjects and the priority region.

12. The control apparatus (100) according to claim 10,
wherein the predetermined set region is a fixed region configured so that an imaging range of the imaging means is fixed in a case where the subject is included in the predetermined set region, and
wherein the determination means (124) determines the predetermined composition based on a position of the plurality of subjects and the fixed region.

13. The control apparatus (100) according to claim 10,
wherein the predetermined set region is an excluded region (1591) configured so that the subject is excluded from a tracking target in a case where the subject is included in the predetermined set region, and
wherein the determination means (124) determines the predetermined composition such that, among the plurality of subjects, a first subject included in the excluded region is not included in an imaging range of the imaging means and a subject other than the first subject is included in the imaging range.

14. A control method comprising:
detecting (S302) a subject from an image captured by imaging means (101, 102, 111);
determining (S304) a predetermined composition for capturing the detected subject; and
controlling (S306) pan, tilt, and zoom of the imaging means (101, 102, 111) so that the detected subject is captured with the predetermined composition,
wherein, in the determining (S304), the predetermined composition is determined by combining two or more compositions selected from among a first composition based on a plurality of subjects, a second composition based on an orientation of the subject, a third composition based on a posture of the subject, and a fourth composition based on a predetermined set region.

15. A program that when executed on a computer causes the computer to perform the control method according to claim 14.
